# EUROPEAN PATENT APPLICATION

(11) **EP 4 451 739 A1**
(43) Date of publication of application: **23.10.2024**
(21) Application number: 23737047.3
(22) Date of filing: 04.01.2023
(51) Int. Cl.: H04W 36/00

(54) **COMMUNICATION METHOD AND APPARATUS**

(30) Priority: 07.01.2022 CN 202210018455
(71) Applicant: Huawei Technologies Co., Ltd., Shenzhen, Guangdong 518129 (CN)
(72) Inventor: HU, Xingxing, Shenzhen, Guangdong 518129 (CN)
(74) Representative: Maiwald GmbH
(86) International application number: PCT/CN2023/070446
(87) International publication number: WO 2023/131184

(57) **Abstract**

This application provides a communication method and apparatus. The method includes: A terminal device receives a conditional handover CHO configuration from a network device to which a serving cell belongs, where the CHO configuration includes trigger conditions respectively corresponding to M candidate cells, and the trigger condition includes a plurality of time trigger conditions and/or a plurality of distance trigger conditions, where M is an integer greater than or equal to 1; and when a trigger condition corresponding to a first candidate cell in the M candidate cells is met, the terminal device is handed over from the serving cell to the first candidate cell, so that handover signaling overheads can be reduced.

## Description

This application claims priority to Chinese Patent Application No. 202210018455.0, filed with the China National Intellectual Property Administration on January 7, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Handover of a terminal device in a network may include conditional handover (conditional handover, CHO). A conditional handover mechanism is used by the terminal device to perform cell handover. Specifically, a network device sends a CHO configuration to the terminal device. The CHO configuration may include configuration information of one or more candidate cells and a trigger condition for conditional handover corresponding to each candidate cell. The trigger condition may also be referred to as an execution condition. Correspondingly, after receiving the CHO configuration for the conditional handover, the terminal device determines, based on the trigger condition in the CHO configuration, whether the trigger condition for handover to a candidate cell is met. If the trigger condition for handover to the candidate cell is met, the candidate cell that meets the trigger condition in the CHO configuration is used as a target cell. Then, the terminal device performs a random access process with the target cell. However, signaling overheads of handover performed based on the conditional handover mechanism are high, and requirements on processing capabilities of the network device and the terminal device are high.

### SUMMARY

Embodiments of this application disclose a communication method and apparatus, to reduce signaling overheads.

A first aspect of embodiments of this application discloses a communication method, including: A terminal device receives a conditional handover CHO configuration from a network device to which a serving cell belongs, where the CHO configuration includes trigger conditions respectively corresponding to M candidate cells, and the trigger condition includes a plurality of time trigger conditions and/or a plurality of distance trigger conditions, where M is an integer greater than or equal to 1; and when a trigger condition corresponding to a first candidate cell in the M candidate cells is met, handover from the serving cell to the first candidate cell is performed.

In the foregoing method, the CHO configuration includes a plurality of time trigger conditions and/or a plurality of distance trigger conditions, so that the network device does not need to resend the CHO configuration to the terminal device, or a quantity of times that the network device resends the CHO configuration to the terminal device is reduced, thereby reducing handover signaling overheads. Further, in a satellite communication scenario, for example, when the network device is a satellite, or when the terminal accesses the network device by using a satellite, the terminal may repeatedly perform handover between a plurality of cells covered by the satellite for a plurality of times, and signaling overheads are large. Therefore, using the technical solution in this application can achieve a better effect of reducing the signaling overheads.

In a possible implementation, the trigger condition corresponding to the first candidate cell includes a plurality of time trigger conditions and/or a plurality of distance trigger conditions corresponding to the first candidate cell. The trigger condition corresponding to the first candidate cell in the M candidate cells is met includes: One of the plurality of time trigger conditions corresponding to the first candidate cell in the M candidate cells is met; and/or one of the plurality of distance trigger conditions corresponding to the first candidate cell in the M candidate cells is met.

In another possible implementation, the trigger condition corresponding to the first candidate cell further includes a signal quality trigger condition corresponding to the first candidate cell. The trigger condition corresponding to the first candidate cell in the M candidate cells is met includes: The signal quality trigger condition corresponding to the first candidate cell in the M candidate cells is met.

In another possible implementation, the time trigger condition includes: Current time recorded by the terminal device is within a first time range. The distance trigger condition includes: A distance between the terminal device and a reference location of the serving cell is greater than a first threshold, and a distance between the terminal device and a reference location of one of the M candidate cells is less than a second threshold.

In another possible implementation, the method further includes: The terminal device determines whether the trigger conditions respectively corresponding to the M candidate cells are met.

In another possible implementation, the method further includes: The terminal device receives first indication information from the network device, where the first indication information indicates a sequence in which the terminal device determines whether the trigger conditions respectively corresponding to the M candidate cells are met.

In the foregoing method, the terminal device receives the first indication information from the network device, so that a case in which the terminal device keeps determining the trigger condition can be avoided, processing complexity of the terminal device is reduced, and energy consumption is reduced.

In another possible implementation, a coverage area of the serving cell is the same as that of one of the M candidate cells, and a cell identity of the serving cell is different from that of the one of the M candidate cells.

In another possible implementation, the method further includes: The terminal device receives at least one trigger condition corresponding to the serving cell from the network device, where one of the at least one trigger condition indicates the terminal device to be handed over from one of the M candidate cells to the serving cell.

In the foregoing method, the terminal device receives the at least one trigger condition corresponding to the serving cell from the network device, where the trigger condition is used for the terminal device to be handed over from the candidate cell to the serving cell, and the network device does not need to resend, to the terminal device, a handover command for the terminal device to be handed over from the candidate cell to the serving cell, thereby reducing signaling overheads.

In another possible implementation, the method further includes: The terminal device adds a CHO configuration corresponding to the serving cell to a candidate cell configuration list, where the CHO configuration corresponding to the serving cell includes the at least one trigger condition corresponding to the serving cell and configuration information corresponding to the serving cell, and the candidate cell configuration list includes CHO configurations corresponding to the M candidate cells.

In the foregoing method, the terminal device adds the CHO configuration corresponding to the serving cell to the candidate cell configuration list, so that the network device can be prevented from resending the CHO configuration to the terminal device when the terminal device is handed over to the serving cell next time, thereby reducing signaling overheads.

In another possible implementation, the method further includes: The terminal device deletes the trigger condition corresponding to the first candidate cell.

In the foregoing method, when one trigger condition of the trigger conditions respectively corresponding to the first candidate cell is met, the terminal device deletes the one trigger condition of the trigger conditions respectively corresponding to the first candidate cell, so that a communication resource can be properly allocated.

In another possible implementation, the CHO configuration further includes a trigger condition corresponding to handover from the first candidate cell to a second candidate cell in the M candidate cells.

In the foregoing method, the network device sends the CHO configuration to the terminal device. The CHO configuration includes at least one of the following: a trigger condition corresponding to handover from the serving cell to the first candidate cell, and the trigger condition corresponding to the handover from the first candidate cell to the second candidate cell. Therefore, it is ensured that the terminal device is handed over to a correct cell while handover signaling overheads are reduced.

In another possible implementation, the method further includes: When the trigger condition corresponding to the handover from the first candidate cell to the second candidate cell in the M candidate cells is met, the terminal device is handed over from the first candidate cell to the second candidate cell.

In another possible implementation, the CHO configuration further includes a trigger condition corresponding to handover from the first candidate cell to the serving cell, or a trigger condition corresponding to handover from the second candidate cell to the serving cell.

In another possible implementation, the method further includes: When the trigger condition corresponding to the handover from the first candidate cell to the serving cell is met, the terminal device is handed over from the first candidate cell to the serving cell; or when the trigger condition corresponding to the handover from the second candidate cell to the serving cell is met, the terminal device is handed over from the second candidate cell to the serving cell.

In the foregoing method, in the foregoing manner, the network device does not need to resend, to the terminal device, the handover command for the terminal device to be handed over from the candidate cell to the serving cell, thereby reducing signaling overheads.

A second aspect of embodiments of this application discloses a communication method, including: A network device sends a conditional handover CHO configuration to a terminal device, where the CHO configuration includes trigger conditions respectively corresponding to M candidate cells, and the trigger condition includes a plurality of time trigger conditions and/or a plurality of distance trigger conditions, where M is an integer greater than or equal to 1.

In a possible implementation, a trigger condition corresponding to a first candidate cell in the M candidate cells includes a plurality of time trigger conditions and/or a plurality of distance trigger conditions corresponding to the first candidate cell.

In another possible implementation, the trigger condition corresponding to the first candidate cell in the M candidate cells further includes a signal quality trigger condition corresponding to the first candidate cell.

In another possible implementation, the time trigger condition includes: Current time recorded by the terminal device is within a first time range. The distance trigger condition includes: A distance between the terminal device and a reference location of the serving cell is greater than a first threshold, and a distance between the terminal device and a reference location of one of the M candidate cells is less than a second threshold.

In another possible implementation, the method further includes: The network device sends first indication information to the terminal device, where the first indication information indicates a sequence in which the terminal device determines whether the trigger conditions respectively corresponding to the M candidate cells are met.

In another possible implementation, a coverage area of the serving cell is the same as that of one of the M candidate cells, and a cell identity of the serving cell is different from that of the one of the M candidate cells.

In another possible implementation, the method further includes: The network device sends at least one trigger condition corresponding to the serving cell to the terminal device, where one of the at least one trigger condition indicates the terminal device to be handed over from one of the M candidate cells to the serving cell.

In another possible implementation, the CHO configuration further includes a trigger condition corresponding to handover from the first candidate cell to a second candidate cell in the M candidate cells.

In another possible implementation, the CHO configuration further includes a trigger condition corresponding to handover from the first candidate cell to the serving cell, or a trigger condition corresponding to handover from the second candidate cell to the serving cell.

For technical effects brought by the second aspect or the possible implementations, refer to the descriptions of the technical effects brought by the first aspect or the corresponding implementations.

A third aspect of embodiments of this application discloses a communication method, including: A terminal device receives identification information of M candidate cells and one or more trigger conditions respectively corresponding to the M candidate cells from a network device to which a serving cell belongs, where M is an integer greater than or equal to 1. When at least one of one or more trigger conditions corresponding to a first candidate cell in the M candidate cells is met, that the terminal device performs handover from the serving cell to the first candidate cell includes: The terminal device changes a cell identity of the serving cell in configuration information of the serving cell to a cell identity of the first candidate cell. The terminal device accesses the first candidate cell based on the configuration information of the serving cell.

In the foregoing method, the network device sends the identifier of the candidate cell and the one or more trigger conditions corresponding to the candidate cell to the terminal device. Correspondingly, the terminal device changes the cell identity of the serving cell in the configuration information of the serving cell to the cell identity of the first candidate cell, and accesses the first candidate cell based on the changed configuration information of the serving cell. In this way, when the cell identity changes, the network device does not need to send a handover command to the terminal device, thereby reducing handover signaling overheads.

In a possible implementation, a trigger condition corresponding to one of the M candidate cells includes at least one of the following: a time trigger condition and a distance trigger condition.

In another possible implementation, the trigger condition corresponding to the one candidate cell includes a plurality of time trigger conditions corresponding to the one candidate cell, and/or a plurality of distance trigger conditions corresponding to the one candidate cell.

In another possible implementation, the time trigger condition includes: Current time recorded by the terminal device is within a first time range. The distance trigger condition includes: A distance between the terminal device and a reference location of the serving cell is greater than a first threshold, and a distance between the terminal device and a reference location of one of the M candidate cells is less than a second threshold.

In another possible implementation, the identification information of the M candidate cells and/or the one or more trigger conditions respectively corresponding to the M candidate cells are included in a dedicated radio resource control RRC message or a broadcast message.

In another possible implementation, the method further includes: The terminal device determines whether the one or more trigger conditions respectively corresponding to the M candidate cells are met.

In another possible implementation, the method further includes: The terminal device receives first indication information from the network device, where the first indication information indicates a sequence in which the terminal device determines whether the one or more trigger conditions respectively corresponding to the M candidate cells are met.

In the foregoing method, the terminal device receives the first indication information from the network device, so that a case in which the terminal device keeps determining the trigger condition can be avoided, processing complexity of the terminal device is reduced, and energy consumption is reduced.

In another possible implementation, the trigger condition corresponding to the first candidate cell includes: The serving cell stops providing a communication service for the terminal device.

In another possible implementation, the method further includes: The terminal device determines, based on the trigger condition corresponding to the first candidate cell, time at which the serving cell stops providing the communication service for the terminal device. That the one or more trigger conditions corresponding to the first candidate cell in the M candidate cells are met includes: The time at which the serving cell stops providing the communication service for the terminal device reaches a predetermined value.

In another possible implementation, a coverage area of the serving cell is the same as that of one of the M candidate cells, and a cell identity of the serving cell is different from that of the one of the M candidate cells.

A fourth aspect of embodiments of this application discloses a communication method, including: A network device sends identification information of M candidate cells and one or more trigger conditions respectively corresponding to the M candidate cells to a terminal device, where M is an integer greater than or equal to 1.

In another possible implementation, a trigger condition corresponding to one of the M candidate cells includes at least one of the following: a time trigger condition and a distance trigger condition.

In another possible implementation, the trigger condition corresponding to the one candidate cell includes a plurality of time trigger conditions corresponding to the one candidate cell, and/or a plurality of distance trigger conditions corresponding to the one candidate cell.

In another possible implementation, the time trigger condition includes: Current time recorded by the terminal device is within a first time range. The distance trigger condition includes: A distance between the terminal device and a reference location of the serving cell is greater than a first threshold, and a distance between the terminal device and a reference location of one of the M candidate cells is less than a second threshold.

In another possible implementation, the identification information of the M candidate cells and/or the one or more trigger conditions respectively corresponding to the M candidate cells are included in a dedicated radio resource control RRC message or a broadcast message.

In another possible implementation, the method further includes: The network device sends first indication information to the terminal device, where the first indication information indicates a sequence in which the terminal device determines whether the one or more trigger conditions respectively corresponding to the M candidate cells are met.

In another possible implementation, the trigger condition corresponding to the first candidate cell includes: The serving cell stops providing a communication service for the terminal device.

In another possible implementation, a coverage area of the serving cell is the same as that of one of the M candidate cells, and a cell identity of the serving cell is different from that of the one of the M candidate cells.

For technical effects brought by the fourth aspect or the possible implementations, refer to the descriptions of the technical effects brought by the third aspect or the corresponding implementations.

A fifth aspect of embodiments of this application discloses a communication apparatus. The communication apparatus may be a terminal device and a chip in the terminal device, and includes modules or units configured to perform the first aspect and the possible implementations of the first aspect.

A sixth aspect of embodiments of this application discloses a communication apparatus. The communication apparatus may be a network device and a chip in the network device, and includes modules or units configured to perform the second aspect and the possible implementations of the second aspect.

A seventh aspect of embodiments of this application discloses a communication apparatus. The communication apparatus may be a terminal device and a chip in the terminal device, and includes modules or units configured to perform the third aspect and the possible implementations of the third aspect.

An eighth aspect of embodiments of this application discloses a communication apparatus. The communication apparatus may be a network device and a chip in the network device, and includes modules or units configured to perform the fourth aspect and the possible implementations of the fourth aspect.

A ninth aspect of embodiments of this application discloses a communication apparatus. The communication apparatus may be a terminal device and a chip in the terminal device. The communication apparatus includes a processor and an interface circuit. Optionally, the communication apparatus further includes a memory. The interface circuit is configured to receive a signal from another apparatus other than the apparatus and transmit the signal to the processor, or send a signal from the processor to another apparatus other than the apparatus, the processor is configured to perform, by using a logic circuit or executing code instructions, the method described in the first aspect or the possible implementations of the first aspect.

A tenth aspect of embodiments of this application discloses a communication apparatus. The communication apparatus may be a network device and a chip in the network device. The communication apparatus includes a processor and an interface circuit. Optionally, the communication apparatus further includes a memory. The interface circuit is configured to receive a signal from another apparatus other than the apparatus and transmit the signal to the processor, or send a signal from the processor to another apparatus other than the apparatus, the processor is configured to perform, by using a logic circuit or executing code instructions, the method described in the second aspect or the possible implementations of the second aspect.

An eleventh aspect of embodiments of this application discloses a communication apparatus. The communication apparatus may be a terminal device and a chip in the terminal device. The communication apparatus includes a processor and an interface circuit. Optionally, the communication apparatus further includes a memory. The interface circuit is configured to receive a signal from another apparatus other than the apparatus and transmit the signal to the processor, or send a signal from the processor to another apparatus other than the apparatus, the processor is configured to perform, by using a logic circuit or executing code instructions, the method described in the third aspect or the possible implementations of the third aspect.

A twelfth aspect of embodiments of this application discloses a communication apparatus. The communication apparatus may be a network device and a chip in the network device. The communication apparatus includes a processor and an interface circuit. Optionally, the communication apparatus further includes a memory. The interface circuit is configured to receive a signal from another apparatus other than the apparatus and transmit the signal to the processor, or send a signal from the processor to another apparatus other than the apparatus, the processor is configured to perform, by using a logic circuit or executing code instructions, the method described in the fourth aspect or the possible implementations of the fourth aspect.

A thirteenth aspect of embodiments of this application discloses a computer program. When the computer program is executed by a communication apparatus, the method described in any one of the foregoing aspects and the possible implementations of any one of the foregoing aspects is implemented.

A fourteenth aspect of embodiments of this application discloses a computer-readable storage medium. The storage medium stores a computer program or instructions. When the computer program or the instructions are executed by a communication apparatus, the method described in any one of the foregoing aspects and the possible implementations of any one of the foregoing aspects is implemented.

A fifteenth aspect of embodiments of this application discloses a chip system. The chip system includes at least one processor, a memory, and an interface circuit. The memory, the interface circuit, and the at least one processor are interconnected by using a line. The at least one memory stores instructions, and when the instructions are executed by the processor, the method described in any one of the foregoing aspects and the possible implementations of any one of the foregoing aspects is implemented.

A sixteenth aspect of embodiments of this application discloses a communication system, including the apparatuses in the tenth aspect and the eleventh aspect, or the apparatuses in the twelfth aspect and the thirteenth aspect.

### BRIEF DESCRIPTION OF DRAWINGS

The following describes accompanying drawings used in embodiments of this application.
FIG. 1 is a diagram of a structure of a communication system 100 according to an embodiment of this application;
FIG. 2 is a diagram of an NTN-based RAN architecture system according to an embodiment of this application;
FIG. 3 is a diagram of another NTN-based RAN architecture system according to an embodiment of this application;
FIG. 4 is a diagram of another NTN-based RAN architecture system according to an embodiment of this application;
FIG. 5 is a diagram of another NTN-based RAN architecture system according to an embodiment of this application;
FIG. 6 is a diagram of binding of a cell identity to a physical area according to an embodiment of this application;
FIG. 7 is a diagram of binding of a cell identity to a satellite according to an embodiment of this application;
FIG. 8 is a schematic flowchart of CHO according to an embodiment of this application;
FIG. 9 is a schematic flowchart of a communication method according to an embodiment of this application;
FIG. 10 is a schematic flowchart of a communication method according to an embodiment of this application;
FIG. 11 is a schematic flowchart of a communication method according to an embodiment of this application;
FIG. 12 is a diagram of a structure of a communication apparatus according to an embodiment of this application; and
FIG. 13 is a diagram of a structure of a communication apparatus according to an embodiment of this application.

### DESCRIPTION OF EMBODIMENTS

The following describes embodiments of this application with reference to the accompanying drawings in embodiments of this application.

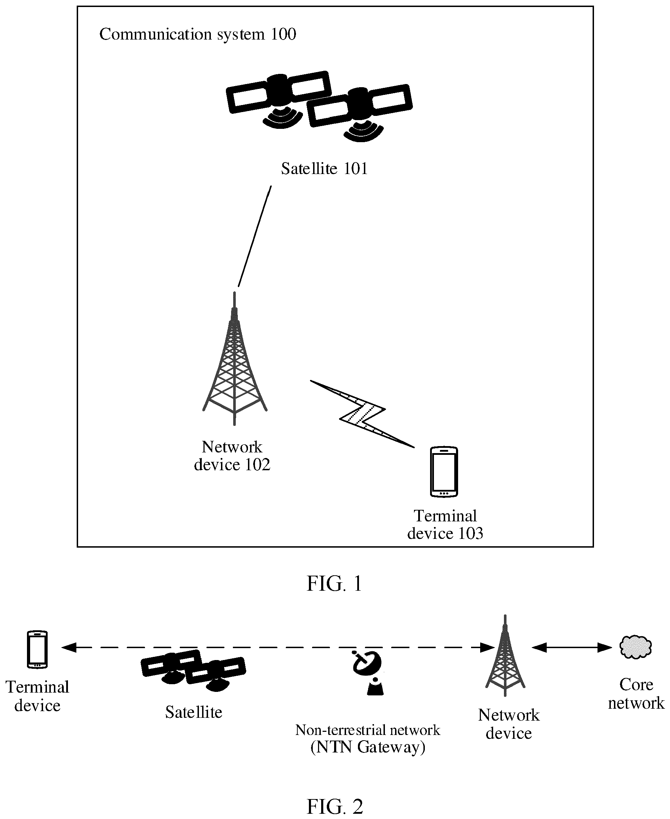

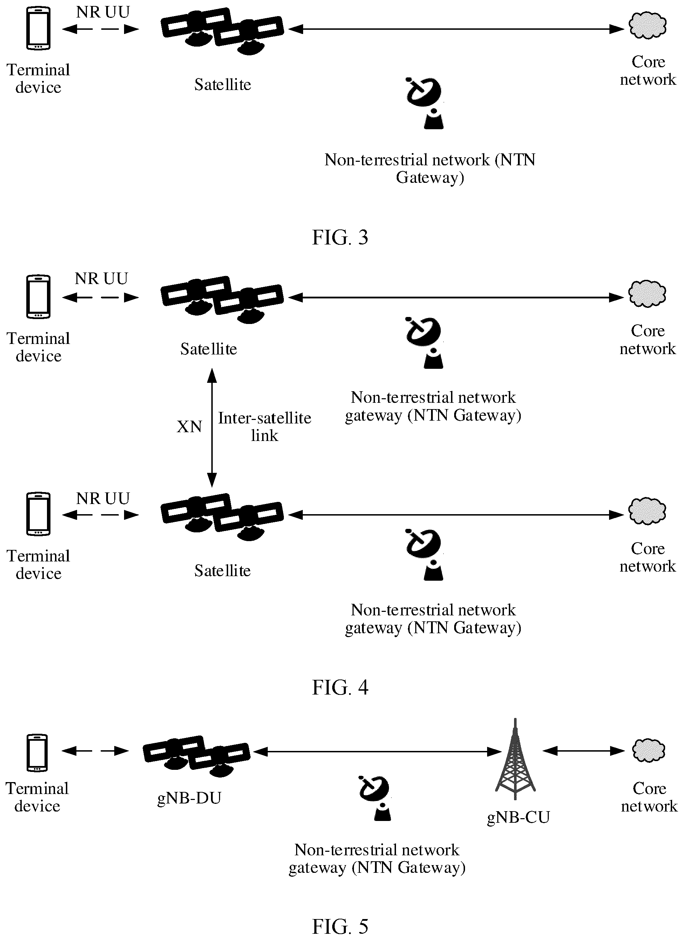

FIG. 1 is a diagram of a structure of a communication system 100 according to an embodiment of this application. The communication system 100 includes a satellite 101, a network device 102, and a terminal device 103. The satellite 101 may alternatively be another air device. The communication system 100 may be a non-terrestrial network (non-terrestrial network, NTN)-based radio access network (radio access network, RAN) architecture system, and the satellite 101 may be a transparent satellite in an NTN-based RAN system. Specifically, as shown in FIG. 2, in this scenario, the satellite 101 is used for radio frequency (or referred to as radio frequency) filtering (radio frequency filtering) and frequency conversion and amplification (frequency conversion and amplification), that is, the satellite 101 is mainly used as a layer 1 relay node (L1 relay) or an analog radio frequency repeater (analogue radio frequency repeater). In this scenario, the satellite 101 only transparently sends a wireless protocol received from the terminal device to the network device 102 and transparently sends a wireless protocol received from the network device 102 to the terminal device. The satellite 101 may alternatively be a regenerative satellite that does not have an inter-satellite link (regenerative satellite without inter-satellite link). Specifically, as shown in FIG. 3, the satellite 101 has a processing function of a base station, and the satellite 101 may be used as a base station. The satellite 101 may alternatively be a regenerative satellite that has an inter-satellite link (regenerative satellite with inter-satellite link). Specifically, as shown in FIG. 4, the satellite 101 has a processing function of a base station, and the satellite 101 may be used as a base station. A difference between the communication system architecture shown in FIG. 4 and the communication system architecture shown in FIG. 3 lies in that there is a communication link between satellites in the communication system architecture shown in FIG. 4, but there is no communication link between satellites in the communication system architecture shown in FIG. 3. The satellite 101 may alternatively be a regenerative satellite that has a processing function of a distributed unit (distributed unit, DU) of a base station (NG-RAN with a regenerative satellite based on gNB-DU). Specifically, as shown in FIG. 5, in this scenario, the satellite may be a distributed unit (distributed unit, DU). The satellite 101 may alternatively be a device having an integrated access and backhaul (integrated access and backhaul, IAB) node function. It should be noted that in some scenarios, the satellite and the network device may be collectively referred to as an access network device. In this case, the network device may be referred to as a ground device having a function of the access network device. A method in embodiments of this application may be applied to the communication system 100 shown in FIG. 1.
(1) A terminal device, also referred to as user equipment (user equipment, UE), a mobile station (mobile station, MS), a mobile terminal (mobile terminal, MT), or the like, includes a device that provides voice and/or data connectivity for a user, and may specifically include a device that provides voice for a user, or include a device that provides data connectivity for a user, or include a device that provides voice and data connectivity for a user. For example, a hand-held device with a wireless communication function, or a processing device connected to a wireless modem may be included. The terminal device may communicate with a core network through a radio access network (radio access network, RAN), and exchange voices or data with the RAN, or exchange voices and data with the RAN. The terminal device may be a device-to-device (device-to-device, D2D) terminal device, a vehicle-to-everything (vehicle to everything, V2X) terminal device, a machine-to-machine/machine type communication (machine-to-machine/machine-type communication, M2M/MTC) terminal device, an internet of things (internet of things, IoT) terminal device, a light terminal device (light UE), capability-reduced user equipment (reduced capability UE, REDCAP UE), a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), or user device (user device). For example, the terminal device may include a mobile phone (or referred to as a "cellular" phone), a computer having a mobile terminal device, or a portable, pocket-sized, hand-held, or a computer-embedded mobile apparatus. For example, the terminal device may be a device, for example, a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal device includes an information sensing device, for example, a barcode, a radio frequency identification (radio frequency identification, RFID), a sensor, a global positioning system (global positioning system, GPS), or a laser scanner.

By way of example, and not limitation, in embodiments of this application, the terminal device may alternatively be a wearable device. The wearable device may also be referred to as a wearable intelligent device, an intelligent wearable device, or the like.

In embodiments of this application, the terminal device may further include a relay (relay). Alternatively, it is understood that any device that can perform data communication with a base station may be considered as the terminal device.

If the terminal devices described above are located on a vehicle (for example, placed in the vehicle or installed in the vehicle), the terminal devices may be considered as in-vehicle terminal devices, and the in-vehicle terminal devices may be implemented as on-board units (on-board units, OBUs) or communication apparatuses used for the OBUs. Alternatively, if the terminal devices described above are located on a road side, for example, disposed on a road side infrastructure, the terminal devices may be implemented as road side units (road side units, RSUs) or communication apparatuses used for the RSUs.

In this embodiment of this application, the apparatus configured to implement a function of the terminal device may be a terminal device, or may be an apparatus that can support the terminal device in implementing the function, for example, a chip system. The apparatus may be installed in the terminal device. In this embodiment of this application, the chip system may include a chip, or may include a chip and another discrete component. In the technical solutions provided in embodiments of this application, an example in which the apparatus configured to implement the function of the terminal is a terminal device is used for describing the technical solutions provided in embodiments of this application.

(2) A network device may be an access network (access network, AN) device, is a radio access network (radio access network, RAN) node (or device) that connects a terminal to a wireless network, and may also be referred to as a base station. Currently, examples of some RAN nodes are: a next generation NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station, (for example, home evolved NodeB, or home NodeB, HNB), a baseband unit (baseband unit, BBU), a wireless fidelity (wireless fidelity, Wi-Fi) access point (access point, AP), or the like. In addition, in a network structure, the access network device may include a central unit (central unit, CU) node, a distributed unit (distributed unit, DU) node, or a RAN device including a CU node and a DU node. The RAN device including the CU node and the DU node splits protocol layers of a gNB in an NR system, functions of some protocol layers are placed in the CU and controlled in a centralized manner, and functions of some or all of the protocol layers are distributed in the DU. Functions of the CU may be further divided. For example, a control plane (CP) and a user plane (UP) are separated, that is, a control plane (CU-CP) of the CU and a user plane (CU-UP) of the CU are separated.

Alternatively, the network device may be a core network (core network, CN) device. The core network device includes, for example, an access and mobility management function (access and mobility management function, AMF) entity, a session management function (session management function, SMF) entity, a user plane function (user plane function, UPF) entity, and the like, which are not listed one by one herein. The AMF entity may be responsible for access management and mobility management of a terminal. The SMF entity may be responsible for session management, for example, user session establishment. The UPF entity may be a function entity on a user plane, and is mainly responsible for connecting to an external network. It should be noted that, the entity in this application may also be referred to as a network element or a function entity. For example, the AMF entity may also be referred to as an AMF network element or an AMF function entity. For another example, the SMF entity may also be referred to as an SMF network element, an SMF function entity, or the like.

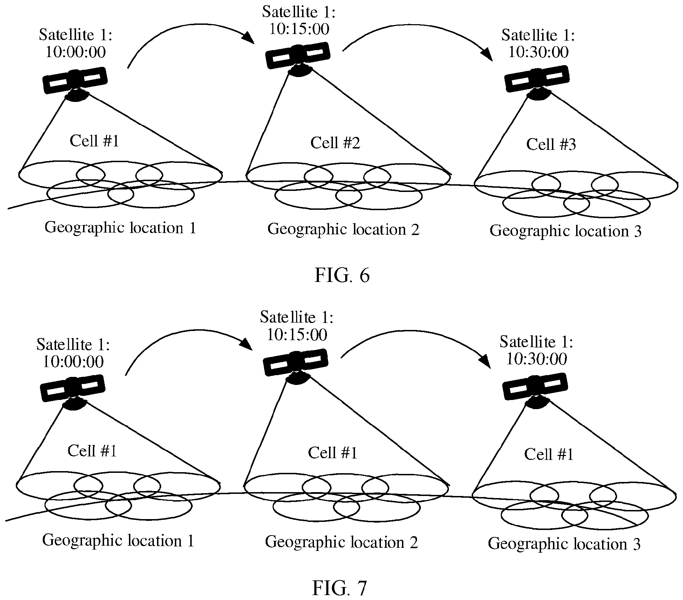

The following describes some terms in this application for ease of understanding.
1. Satellite communication: Generally, a higher orbit of a satellite indicates a larger coverage area of the satellite, but a longer communication delay. Generally, orbits of satellites may be classified into the following based on altitudes:
   (1) Low earth orbit (low earth orbit, LEO) satellite with an orbital altitude of 160 to 2000 km.
   (2) Medium orbit earth (medium orbit earth, MEO) satellite with an orbital altitude of 2000 to 35786 km.
   (3) Geostationary orbit earth (geostationary orbit earth, GEO) satellite with an orbital altitude of 35786 km. A relative position between the satellite in this orbit and the Earth is not affected by rotation of the Earth.
2. Satellite deployment solution: In terrestrial communication, a base station may have a plurality of cells. Generally, cell identities of these cells, such as a physical cell identifier (physical cell identifier, PCI) or a global cell identifier (cell global identifier, CGI), and broadcast area identifiers, such as a tracking area code (tracking area code, TAC) or a tracking area identity (tracking area identity, TAI), do not change within long time. In satellite communication, a physical coverage area of a satellite is changed because the satellite is moving at a high speed. For an identifier corresponding to the physical coverage area of the satellite, there are currently two deployment solutions: (1) Deployment solution 1: These identifiers are bound to a physical area (or referred to as a geographical area). That is, for a physical area, an identifier corresponding to the area remains unchanged. After a satellite (referred to as an old satellite for short) is removed, another satellite (referred to as a new satellite for short) provides a service for the area, and an identifier corresponding to the new satellite is the same as that of the old satellite. As shown in FIG. 6, a satellite 1 moves to a geographic location 1 at 10:00, a cell covered by the satellite 1 is a cell #1, and an identifier of the cell #1 is a PCI 1; a satellite 1 moves to a geographic location 2 at 10: 15, a cell covered by the satellite 1 is a cell #2, and an identifier of the cell #2 is a PCI 2; and a satellite 1 moves to a geographic location 3 at 10:30, a cell covered by the satellite 1 is a cell #3, and an identifier of the cell #3 is a PCI 3. For the cell #1, the cell #2, and the cell #3, no matter they are covered by which satellite, the identifier PCI 1 of the cell #1, the identifier PCI 2 of the cell #2, and the identifier PCI 3 of the cell #3 remain unchanged. (2) Deployment solution 2: These identifiers are bound to satellites. When a coverage area of a satellite changes due to movement of the satellite, an identifier of a cell covered by the satellite or a broadcast area identifier does not change. As shown in FIG. 7, a satellite 1 moves to a geographic location 1 at 10:00, a cell covered by the satellite 1 is a cell #1, and an identifier of the cell #1 is a PCI 1; a satellite 1 moves to a geographic location 2 at 10:15, a cell covered by the satellite 1 is a cell #1, and an identifier of the cell #1 is a PCI 1; a satellite 1 moves to a geographic location 3 at 10:30, a cell covered by the satellite 1 is a cell #1, and an identifier of the cell #1 is a PCI 1. For the cell #1 covered by the satellite 1, no matter how the satellite moves, the identifier PCI 1 of the cell #1 remains unchanged. In this solution, it may be understood that these identifiers are scanned in a physical coverage area as a satellite moves. In this solution, even if a location of a terminal device remains unchanged, because a satellite is moving, when the satellite cannot cover the terminal device, a network side needs to notify the terminal device to perform handover to another cell.

The movement of the satellite causes a terminal device in a connected mode covered by the satellite needs to be handed over to another satellite. Because satellite handover causes a change of a serving cell corresponding to the terminal device, that is, an identifier of the serving cell changes, the network side needs to notify the terminal device covered by the satellite to perform handover. In addition, due to high-speed movement of a satellite, satellite handover is frequent, which causes a large quantity of handovers in a network. The handover may include a conventional handover procedure and conditional handover (conditional handover, CHO).

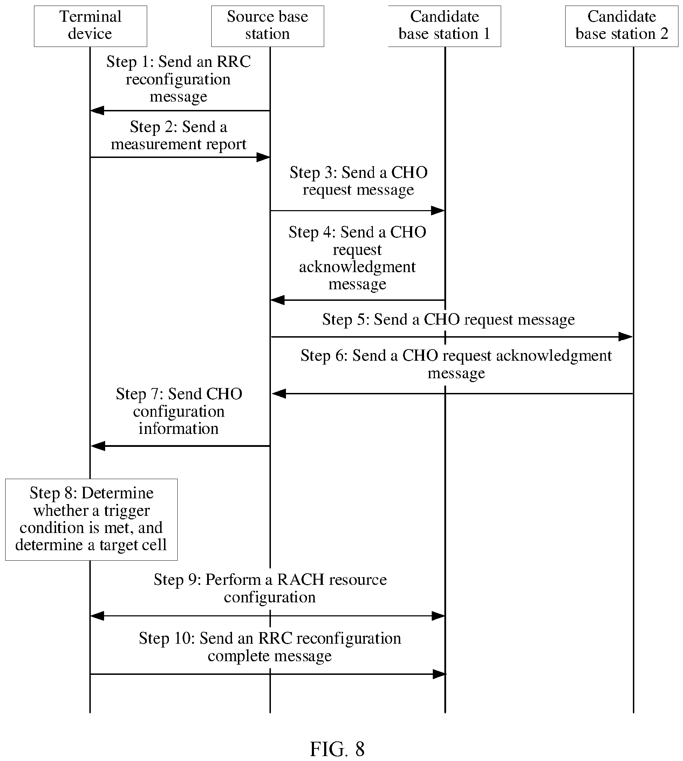

3. Conditional handover (conditional handover, CHO): A network device sends a CHO configuration to a terminal device. The CHO configuration may include configuration information of one or more candidate cells and trigger conditions for conditional handover corresponding to the candidate cells, and the trigger conditions may also be referred to as execution conditions. The configuration information of the candidate cell may include some information about the cell and some resources that are configured by a network side for the terminal device in the candidate cell. For example, the resources are a CGI or a PCI of a candidate cell, and configuration information that is of protocol layers such as a physical layer (physical layer, PHY), a media access control layer (media access control, MAC), a radio link control (radio link control, RLC) layer, and a packet data convergence protocol (packet data convergence protocol, PDCP) layer and that is configured by the network side for the terminal device in the candidate cell. Correspondingly, after receiving the CHO configuration for the conditional handover, the terminal device determines, based on a trigger condition in the CHO configuration, whether a trigger condition corresponding to handover to the candidate cell is met. If the trigger condition in the CHO configuration is met, a candidate cell that meets the trigger condition in the CHO configuration is used as a target cell. Then, the terminal device performs a random access process with the target cell. After the random access is successfully completed, the terminal device sends, to a base station to which the target cell belongs, namely, a target base station, an RRC message, for example, an RRC reconfiguration complete message, to notify the target base station that the conditional handover is completed. Specifically, as shown in FIG. 8, a procedure is as follows:
Step 1: A source base station sends a radio resource control (radio resource control, RRC) reconfiguration message to a terminal device, where the RRC reconfiguration message includes parameters such as a measurement object, a report configuration, and a measurement identifier.
Step 2: After measuring a series of cells based on the RRC reconfiguration message, the terminal device forms a measurement report, and reports various events to the currently connected source base station.
Step 3: The source base station determines to use conditional handover, and sends, based on the measurement report, a CHO request message to a candidate base station 1 that meets a handover condition.
Step 4: The candidate base station 1 performs access control, and sends a CHO request acknowledgment message to the source base station if the candidate base station 1 agrees to the conditional handover.
Step 5: The source base station determines to use the conditional handover, and sends, based on the measurement report, a CHO request message to a candidate base station 2 that meets the handover condition.
Step 6: The candidate base station 2 performs access control, and sends a CHO request acknowledgment message to the source base station if the candidate base station 2 agrees to the conditional handover.
Step 7: The source base station sends a CHO configuration to the terminal device.
Step 8: The terminal device determines, based on the CHO configuration, whether a trigger condition is met, to determine a target cell.
Step 9: If the terminal device determines that the trigger condition is met and determines that the target cell is the candidate base station 1, the terminal device performs a random access process with the candidate base station 1. For example, the terminal device performs random access channel (random access channel, RACH) resource configuration with the candidate base station 1.
Step 10: The terminal device sends an RRC reconfiguration complete message to the candidate base station 1, where the RRC reconfiguration complete message notifies the candidate base station 1 that the conditional handover is completed.

4. Trigger condition in the CHO (referred to as a "trigger condition" in this application for short): The trigger condition may include a time trigger condition. For example, the time trigger condition is a time period [t1, t2], and the terminal device may be handed over to a candidate cell within the time period, or the terminal device is allowed to perform CHO of the candidate cell within the time period. Optionally, the trigger condition may further include a signal quality trigger condition. To be specific, within the time period [t1, t2], if signal quality of a candidate cell measured by the terminal device meets the signal quality trigger condition, the terminal device may be handed over to the candidate cell. The trigger condition may further include a distance trigger condition. For example, a distance between the terminal device and a reference location of a current serving cell is greater than a threshold #1, and a distance between the terminal device and the reference location of the candidate cell is less than a threshold #2. Optionally, the trigger condition may further include a signal quality trigger condition. To be specific, when the distance trigger condition is met, if signal quality of a candidate cell measured by the terminal device meets the signal quality trigger condition, the terminal device may be handed over to the candidate cell. The trigger condition is for a current serving cell and a candidate cell to be accessed. For example, the network device configures a CHO configuration of a candidate cell 2 and a CHO configuration of a candidate cell 3 for the terminal device, where the CHO configuration of the candidate cell 2 includes a signal quality trigger condition #1, the signal quality trigger condition #1 may be that signal quality of the candidate cell 2 is better than signal quality of the current serving cell 1, the CHO configuration of the candidate cell 3 includes a signal quality trigger condition #2, and the signal quality trigger condition #2 may be that signal quality of the candidate cell 3 is better than the signal quality of the current serving cell 1. When the signal quality trigger condition #1 is met, the terminal device is handed over from the current serving cell 1 to the candidate cell 2. However, the signal quality trigger condition #2 is no longer applicable to a case in which the terminal device accesses the candidate cell 3 from the candidate cell 2, and a handover failure is easily caused. For the time trigger condition, the terminal device may determine, based on a time trigger condition corresponding to each candidate cell, a handover sequence in which the terminal device is handed over to each candidate cell. However, for the distance trigger condition, the terminal device does not know a handover sequence in which the terminal device is handed over to each candidate cell. As a result, the terminal device keeps determining the distance trigger condition in each candidate cell, thereby increasing processing complexity and power consumption of the terminal device. In addition, the terminal device may access an improper cell.

However, for the foregoing satellite deployment solution 1 and deployment solution 2, when a cell identity, for example, a PCI, is planned in a network, one base station may have only a limited quantity of available cell identities. Therefore, cell identities of cells that the terminal device passes through are limited. For example, a satellite moves back and forth above a cell 1, a cell 2, a cell 3, and a cell 4. The network device sends CHO configurations corresponding to four candidate cells to the terminal device. The four candidate cells are the cell 1, the cell 2, the cell 3, and the cell 4. CHO configurations corresponding to the four candidate cells are respectively a CHO configuration 1, a CHO configuration 2, a CHO configuration 3, and a CHO configuration 4. The CHO configuration 1 includes a time trigger condition of the cell 1, the CHO configuration 2 includes a time trigger condition of the cell 2, the CHO configuration 3 includes a time trigger condition of the cell 3, and the CHO configuration 4 includes a time trigger condition of the cell 4. Each candidate cell has only one time trigger condition, in other words, the terminal device can access a candidate cell only once by using the CHO configuration. To be specific, the terminal device may be handed over from the cell 1 to the cell 2, then handed over from the cell 2 to the cell 3, and then handed over from the cell 3 to the cell 4. When a satellite moves to the cell 1 again, a movement track is still above the cell 1, the cell 2, the cell 3, and the cell 4. Then, the network device needs to reconfigure CHO configurations corresponding to the four candidate cells for the terminal device, and consequently, signaling overheads are high. In addition, if the network device has a plurality of candidate cells, the network device needs to store configurations of the plurality of candidate cells, resulting in high processing complexity of the network device.

### Embodiment 1:

This application provides a communication method, to resolve a problem that handover signaling overheads are high in conditional handover CHO and requirements on processing capabilities of a network device and a terminal device are high.

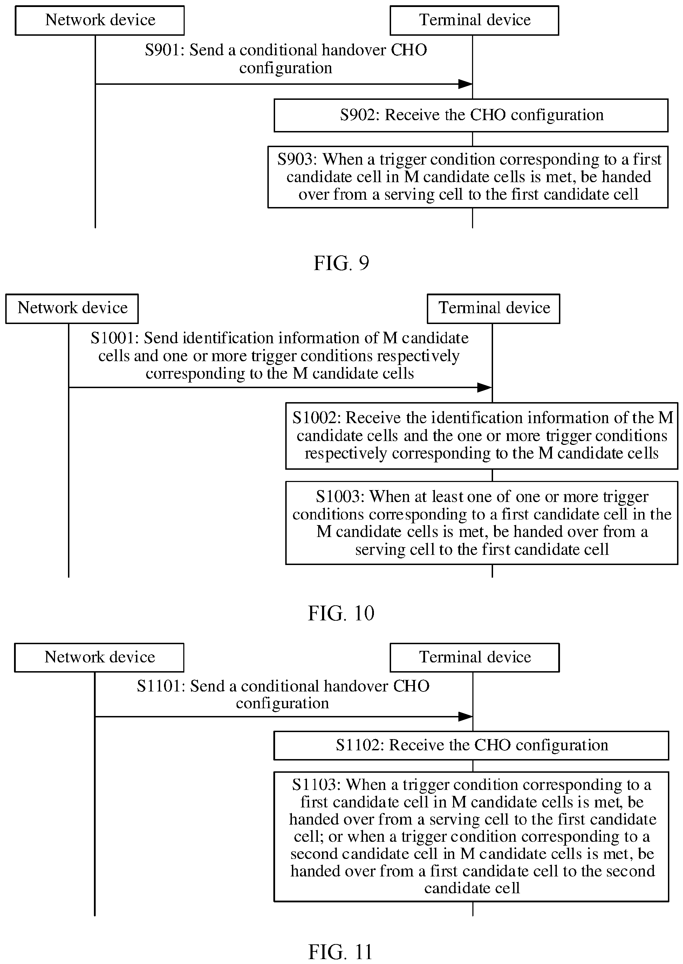

FIG. 9 shows a communication method according to an embodiment of this application. The method includes but is not limited to the following steps.

Step S901: A network device sends a CHO configuration to a terminal device.

The network device is a device having a function of a base station. For example, the network device may be a network device in the communication architecture shown in FIG. 2. In the communication architectures shown in FIG. 3 and FIG. 4, the network device may be a satellite. In the communication architecture shown in FIG. 5, the network device may be a DU or a CU.

Step S902: The terminal device receives the CHO configuration from the network device.

Specifically, that a cell managed by the network device includes a serving cell of the terminal device may be understood as that a cell served by the network device includes the serving cell of the terminal device. Optionally, the cell managed by the network device may further include M candidate cells, or may not include M candidate cells. This is not limited in this embodiment of this application. The candidate cell is a candidate cell for CHO. The CHO configuration includes trigger conditions respectively corresponding to M candidate cells, and the trigger condition includes a plurality of time trigger conditions and/or a plurality of distance trigger conditions, where M is an integer greater than or equal to 1. Each candidate cell in the M candidate cells corresponds to one CHO configuration, and the CHO configuration of each candidate cell includes a plurality of time trigger conditions and/or a plurality of distance trigger conditions. Optionally, the CHO configuration corresponding to each candidate cell includes configuration information corresponding to the candidate cell.

Optionally, a coverage area of the serving cell may be the same as that of one of the M candidate cells, and a cell identity of the serving cell is different from that of one (for example, a candidate cell #A) of the M candidate cells. That is, the serving cell and the candidate cell #A may have a same configuration except that the cell identities may be different. The cell identity may be a PCI. CGIs of the serving cell and the candidate cell #A may be the same or may be different. Optionally, a coverage area of the serving cell may be different from a coverage area of one (for example, a candidate cell #B) of the M candidate cells, and a cell identity of the serving cell is different from a cell identity of the candidate cell #B.

Optionally, the M candidate cells may be some of all candidate cells. In an example, it is assumed that a source base station determines that there are four candidate cells in total, where M may be less than 4, the M candidate cells are a part of the four candidate cells, and the four candidate cells are respectively a cell 1, a cell 2, a cell 3, and a cell 4. A trigger condition is used as a time trigger condition for description, where the cell 2, the cell 3, and the cell 4 each correspond to two time trigger conditions, and the cell 1 corresponds to one time trigger condition, the network device sends a CHO configuration to the terminal device. The CHO configuration may include trigger conditions corresponding to three candidate cells, and the three candidate cells are the cell 2, the cell 3, and the cell 4.

Optionally, the time trigger condition includes: Current time recorded by the terminal device is within a first time range. The current time recorded by the terminal device may include a moment at which the terminal device performs measurement or a moment at which the terminal device determines whether the time trigger condition is met. Optionally, the current time may be time displayed on a display screen of the terminal device. Optionally, the first time range may be a time period, for example, [t1, t2]. In an optional manner, both t1 and t2 are in an absolute time format, for example, coordinated universal time (coordinated universal time, UTC). In an example, [t1, t2]=[10:00, 12:00]. In another optional manner, a representation form of [t1, t2] may be [T1, T1+Duration], where T1 may be in an absolute time format, for example, UTC, and Duration is duration after T1. In an example, the time trigger condition may be [10:00, 10:00+2h], and the first time range is [10:00, 12:00]. It is assumed that the current time recorded by the terminal device is 11:00. Because 11:00 is within the first time range [10:00, 12:00], it indicates that the terminal device may be handed over to a candidate cell corresponding to the time trigger condition at a current moment.

Optionally, the distance trigger condition includes: A distance between the terminal device and a reference location of a serving cell is greater than a first threshold, and a distance between the terminal device and a reference location of one of the M candidate cells is less than a second threshold. The reference location may be a central location of a physical coverage area of a cell. The reference location of the serving cell and the reference location of the candidate cell may be predefined or determined by the network device. The first threshold and the second threshold may be predefined in a protocol or determined by the network device. In an example, the first threshold is a threshold 1, the second threshold is a threshold 2, and a distance trigger condition may be [threshold 1, threshold 2], which indicates that when a distance between the terminal device and a reference location of the serving cell is greater than the threshold 1, and a distance between the terminal device and one of the M candidate cells, for example, a reference location of the cell 1, is less than the threshold 2, the terminal device may be handed over to the cell 1.

In an example, it is assumed that a serving cell is a cell 1, M=2, and the two candidate cells are a cell 2 and a cell 3. The network device sends a CHO configuration corresponding to the cell 2 and a CHO configuration corresponding to the cell 3 to the terminal device. The CHO configuration corresponding to the cell 2 includes two time trigger conditions corresponding to the cell 2, which are respectively [t1, t1+duration1] and [t4, t4+duration4]. Optionally, the CHO configuration corresponding to the cell 2 may further include two distance trigger conditions corresponding to the cell 2, which are respectively [threshold 1, threshold 2] and [threshold 5, threshold 6]. The CHO configuration corresponding to the cell 3 includes two time trigger conditions corresponding to the cell 3, which are respectively [t2, t2+duration2] and [t5, t5+duration5]. Optionally, the CHO configuration corresponding to the cell 3 may further include two distance trigger conditions corresponding to the cell 3, which are respectively [threshold 3, threshold 4] and [threshold 7, threshold 8].

Further, optionally, after receiving the CHO configuration corresponding to each candidate cell, the terminal device stores the CHO configuration of each candidate cell, that is, adds the CHO configuration of each candidate cell to a candidate cell configuration list. Optionally, after receiving the CHO configuration corresponding to each candidate cell, the terminal device first performs the following processing for each candidate cell: obtaining final configuration information of the candidate cell based on configuration information of the serving cell at the current moment and configuration information corresponding to the candidate cell in the CHO configuration of the candidate cell (for example, the configuration information corresponding to the candidate cell in the CHO configuration includes only a difference between the configuration information of the candidate cell and the configuration information of the current serving cell). Then, the final configuration information of the candidate cell and the trigger condition corresponding to the candidate cell are added to the candidate cell configuration list. Alternatively, optionally, after receiving the CHO configuration corresponding to each candidate cell, the terminal device adds the CHO configuration of each candidate cell to the candidate cell configuration list, and adds indication information to the candidate cell configuration list, where the indication information indicates configuration information of which cell is used as a reference for configuration information of each candidate cell (the reference herein means that the terminal device needs to obtain final configuration information of the candidate cell based on configuration information of a reference cell and the configuration information of the candidate cell carried in the CHO configuration of the candidate cell). For example, if the configuration information of the current serving cell is used as the reference for the configuration information of each candidate cell, indication information is added to the candidate cell configuration list, where the indication information is a cell identity of the current serving cell, and indicates that a configuration of the serving cell is used as a reference for the configuration information of each candidate cell.

In the foregoing method, the network device sends the CHO configuration to the terminal device, where the CHO configuration includes trigger conditions respectively corresponding to M candidate cells, and the trigger condition includes a plurality of time trigger conditions and/or a plurality of distance trigger conditions. Correspondingly, the terminal device may perform, based on the plurality of time trigger conditions and/or the plurality of distance trigger conditions, handover between candidate cells for a plurality of times. In performing the handover for the plurality of times, performing the handover between candidate cells for one time may be understood as, for example, performing handover between three candidate cells, that is, the terminal device is handed over from a cell 1 to a cell 2, and then handed over from the cell 2 to a cell 3. The performing handover between candidate cells for a plurality of times may be understood as that the terminal device is handed over from a cell 1 to a cell 2, handed over from the cell 2 to a cell 3, and then handed over from the cell 3 to the cell 1 for a plurality of times based on the CHO configuration, so that the network device does not need to resend the CHO configuration to the terminal device, or a quantity of times for which the network device sends the CHO configuration to the terminal device is reduced, thereby reducing handover signaling overheads.

Step S903: When a trigger condition corresponding to a first candidate cell in the M candidate cells is met, the terminal device is handed over from the serving cell to the first candidate cell.

Optionally, when the trigger condition corresponding to the first candidate cell is met, the terminal device uses the configuration information corresponding to the first candidate cell. For example, the terminal device initiates a random access process to the first candidate cell. After the terminal device is handed over to the first candidate cell, the terminal device may further continue to store a CHO configuration corresponding to the first candidate cell.

That the trigger condition corresponding to the first candidate cell is met may refer to that one of a plurality of time trigger conditions corresponding to the first candidate cell is met, and/or one of a plurality of distance trigger conditions corresponding to the first candidate cell is met.

Optionally, the trigger condition corresponding to the first candidate cell may further include a signal quality trigger condition corresponding to the first candidate cell. Optionally, the signal quality trigger condition may refer to that signal quality of the first candidate cell is greater than a third threshold, and the third threshold may be predefined in a protocol or determined by the network device. Correspondingly, that the trigger condition corresponding to the first candidate cell is met may also refer to that the signal quality trigger condition corresponding to the first candidate cell in the M candidate cells is met. In an example, that the trigger condition corresponding to the first candidate cell is met may refer to that one of the plurality of time trigger conditions corresponding to the first candidate cell is met, and the signal quality trigger condition corresponding to the first candidate cell is met. In another example, that the trigger condition corresponding to the first candidate cell is met may refer to that one of the plurality of distance trigger conditions corresponding to the first candidate cell is met, and the signal quality trigger condition corresponding to the first candidate cell is met.

Optionally, when the trigger condition corresponding to the first candidate cell is met, after the terminal device is handed over from the serving cell to the first candidate cell, the terminal device may delete the trigger condition corresponding to the first candidate cell. For example, if one of the plurality of time trigger conditions corresponding to the first candidate cell in the M candidate cells is met, the terminal device may delete the met time trigger condition. In an example, it is assumed that the first candidate cell corresponds to two time trigger conditions: a condition 1 and a condition 2. When the condition 1 corresponding to the first candidate cell is met, the terminal device deletes the condition 1, and the condition 2 continues to be retained. In this manner, the terminal device can properly arrange a communication resource.

In an example, it is assumed that the serving cell is a cell 1, M=2, and the two candidate cells are a cell 2 and a cell 3. A time trigger condition is used as an example, and time in the time trigger condition is UTC. The network device sends a CHO configuration of the cell 2 and a CHO configuration of the cell 3 to the terminal device. The CHO configuration of the cell 2 includes two time trigger conditions corresponding to the cell 2, which are respectively [t1, t1+duration1] and [t4, t4+duration4]. The CHO configuration of the cell 3 includes two time trigger conditions corresponding to the cell 3, which are respectively [t2, t2+duration2] and [t5, t5+duration5]. The network device may further send a CHO configuration of the cell 1 to the terminal device. The CHO configuration of the cell 1 includes two time trigger conditions corresponding to the cell 1, which are respectively [t3, t3+duration3] and [t6, t6+duration6]. Further, for example, [t1, t1+duration1] may be [1:00, 2:00], [t4, t4+duration4] may be [7:00, 8:00], [t2, t2+duration2] may be [3:00, 4:00], [t5, t5+duration5] may be [9:00, 10:00], [t3, t3+duration3] may be [5:00, 6:00], [t6, t6+duration6] may be [11:00, 12:00], and current time recorded by the terminal device is 1:01. Because 1:01 is in the time trigger condition [1:00, 2:00] corresponding to the cell 2, the terminal device is handed over from the serving cell to the first candidate cell, that is, is handed over from the cell 1 to the cell 2. Optionally, the terminal device may delete the time trigger condition [1:00, 2:00] corresponding to the cell 2.

In an optional manner, before S903, the communication method shown in FIG. 9 further includes: S9021: The terminal device determines whether the trigger conditions respectively corresponding to the M candidate cells are met.

Optionally, the terminal device receives first indication information from the network device, where the first indication information indicates a sequence in which the terminal device determines whether the trigger conditions respectively corresponding to the M candidate cells are met.

Optionally, the sequence of determining whether the trigger conditions respectively corresponding to the M candidate cells are met may be a sequence of determining whether a trigger condition corresponding to each M candidate cell in the M candidate cells is met. The sequence of determining whether the trigger conditions respectively corresponding to the M candidate cells are met may be understood as a sequence in which the terminal device is handed over to the candidate cells.

Optionally, when the terminal device receives at least one trigger condition corresponding to the serving cell from the network device, where one of the at least one trigger condition indicates a case in which the terminal device is handed over from one of the M candidate cells to the serving cell, the terminal device receives first indication information from the network device, and the first indication information indicates a sequence of determining whether the trigger conditions respectively corresponding to the M candidate cells and the at least one trigger condition corresponding to the serving cell are met.

In an example, it is assumed that a serving cell of the terminal device is a cell 1, M=2, and the two candidate cells are a cell 2 and a cell 3. The network device sends a CHO configuration of the cell 2 and a CHO configuration of the cell 3 to the terminal device. The CHO configuration of the cell 2 includes two time trigger conditions corresponding to the cell 2, which are respectively [t1, t1+duration1] and [t4, t4+duration4]. The CHO configuration of the cell 3 includes two time trigger conditions corresponding to the cell 3, which are respectively [t2, t2+duration2] and [t5, t5+duration5]. The network device may further send a CHO configuration of the cell 1 to the terminal device. The CHO configuration of the cell 1 includes two time trigger conditions corresponding to the cell 1, which are respectively [t3, t3+duration3] and [t6, t6+duration6]. Correspondingly, the terminal device receives the CHO configuration from the network device. The network device may further send the first indication information to the terminal device. Correspondingly, the terminal device receives the first indication information from the network device. In an example, for example, the first indication information may be t1<t2<t3<t4<t5<t6. The terminal device determines, based on the first indication information, a sequence of determining whether a trigger condition corresponding to each candidate cell in the M candidate cells and at least one trigger condition corresponding to the serving cell are met. The sequence is [t1, t1+duration1], [t2, t2+duration2], [t3, t3+duration3], [t4, t4+duration4], [t5, t5+duration5], and [t6, t6+duration6]. Correspondingly, a sequence in which the terminal device is handed over to the candidate cells is the cell 2, the cell 3, the cell 1, the cell 2, the cell 3, and the cell 1, that is, the terminal device is handed over from the cell 1 to the cell 2, from the cell 2 to the cell 3, from the cell 3 to the cell 1, from the cell 1 to the cell 2, then from the cell 2 to the cell 3, and finally from the cell 3 to the cell 1. In another example, for example, the CHO configuration of the cell 2 sent by the network device to the terminal device carries the first indication information, and the first indication information is 1 and 4. The CHO configuration of the cell 3 sent by the network device to the terminal device carries the first indication information, and the first indication information is 2 and 5. The CHO configuration of the cell 1 sent by the network device to the terminal device carries the first indication information, and the first indication information is 3 and 6. In other words, the terminal device determines, based on the first indication information, a sequence of determining whether the trigger condition corresponding to each candidate cell in the M candidate cells and the at least one trigger condition corresponding to the serving cell are met. The sequence is [t1, t1+duration1], [t2, t2+duration2], [t3, t3+duration3], [t4, t4+duration4], [t5, t5+duration5], and [t6, t6+duration6]. Correspondingly, a sequence of cells to which the terminal device is handed over is the cell 2, the cell 3, the cell 1, the cell 2, the cell 3, and the cell 1.

In the foregoing method, the terminal device receives the first indication information from the network device, so that a case in which the terminal device keeps determining the trigger condition can be avoided, processing complexity of the terminal device is reduced, and energy consumption is reduced.

Optionally, when the trigger condition corresponding to the first candidate cell in the M candidate cells is met, after the terminal device is handed over from the serving cell to the first candidate cell, when a trigger condition corresponding to a second candidate cell in the M candidate cells is met, the terminal device is handed over from the first candidate cell to the second candidate cell, and after the terminal device is handed over to the second candidate cell, details may be as follows. Alternatively, when the trigger condition corresponding to the first candidate cell in the M candidate cells is met, after the terminal device is handed over from the serving cell to the first candidate cell, details may be as follows:

In a possible implementation, the terminal device receives at least one trigger condition corresponding to the serving cell from the network device, where one of the at least one trigger condition indicates the terminal device to be handed over from one of the M candidate cells to the serving cell. For example, one of the M candidate cells is a second candidate cell, and when at least one trigger condition corresponding to the serving cell is met, the terminal device is handed over from the second candidate cell to the serving cell. Alternatively, for example, M=1, and one of the M candidate cells is a first candidate cell. When at least one trigger condition corresponding to the serving cell is met, the terminal device is handed over from the first candidate cell to the serving cell. It should be noted that the at least one trigger condition corresponding to the serving cell is not necessarily received after the terminal device is handed over to the second candidate cell or after the terminal device is handed over to the first candidate cell, or may be carried in the CHO configuration. This is not limited herein.

Optionally, the trigger condition corresponding to the serving cell includes a plurality of time trigger conditions corresponding to the serving cell, and/or a plurality of distance trigger conditions corresponding to the serving cell. Optionally, the trigger condition corresponding to the serving cell further includes a signal quality trigger condition corresponding to the serving cell. In an example, the trigger condition corresponding to the serving cell includes the plurality of time trigger conditions corresponding to the serving cell and the signal quality trigger condition corresponding to the serving cell. In another example, the trigger condition corresponding to the serving cell includes the plurality of distance trigger conditions corresponding to the serving cell and the signal quality trigger condition corresponding to the serving cell. The at least one trigger condition corresponding to the serving cell may be carried in a CHO configuration corresponding to the serving cell. Optionally, the CHO configuration corresponding to the serving cell does not include configuration information of the serving cell. Optionally, the CHO configuration corresponding to the serving cell further includes the configuration information of the serving cell.

In an example, it is assumed that the serving cell is a cell 1, M=2, and the two candidate cells are a cell 2 and a cell 3. The network device sends a CHO configuration of the cell 2 and a CHO configuration of the cell 3 to the terminal device. The CHO configuration of the cell 2 includes two time trigger conditions corresponding to the cell 2, which are respectively [t1, t1+duration1] and [t4, t4+duration4]. The CHO configuration of the cell 3 includes two time trigger conditions corresponding to the cell 3, which are respectively [t2, t2+duration2] and [t5, t5+duration5]. The network device may further send a CHO configuration of the cell 1 to the terminal device. The CHO configuration of the cell 1 includes two time trigger conditions corresponding to the cell 1, which are respectively [t3, t3+duration3] and [t6, t6+duration6]. Correspondingly, the terminal device receives the CHO configuration from the network device.

In the foregoing method, the terminal device receives the at least one trigger condition corresponding to the serving cell from the network device, where the trigger condition is used for the terminal device to be handed over from a candidate cell to the serving cell, and the network device does not need to resend, to the terminal device, a handover command for the terminal device to be handed over from the candidate cell to the serving cell, thereby reducing signaling overheads.

In a possible implementation, when the CHO configuration corresponding to the serving cell does not include the configuration information of the serving cell, after the terminal device receives the at least one trigger condition corresponding to the serving cell from the network device, the terminal device may add, to the candidate cell configuration list, the CHO configuration corresponding to the serving cell and configuration information corresponding to the serving cell at a current moment. When the CHO configuration corresponding to the serving cell includes the configuration information of the serving cell, after the terminal device receives the at least one trigger condition corresponding to the serving cell from the network device, the terminal device may add the CHO configuration corresponding to the serving cell to the candidate cell configuration list. The configuration information of the serving cell may also be understood as a resource configuration of the serving cell. This is not limited herein.

The CHO configuration corresponding to the serving cell includes the at least one trigger condition corresponding to the serving cell, and the candidate cell configuration list includes CHO configurations corresponding to the M candidate cells.

Optionally, after receiving the CHO configurations corresponding to the M candidates, the terminal device adds the CHO configurations corresponding to the M candidates to the candidate cell configuration list. That the terminal device receives the at least one trigger condition corresponding to the serving cell from the network device may be understood as that the terminal device receives indication information from the network device, where the indication information indicates that the serving cell may be used as a candidate cell. In this case, the terminal device adds, to the candidate cell configuration list, the CHO configuration corresponding to the serving cell and configuration information corresponding to the serving cell at a current moment.

In an example, it is assumed that the serving cell is a cell 1, M=2, and the candidate cell configuration list includes CHO configurations of two candidate cells, which are respectively a CHO configuration of a cell 2 (including a trigger condition for handover to the cell 2 and configuration information corresponding to the cell 2) and a CHO configuration of a cell 3 (including a trigger condition for handover to the cell 3 and configuration information corresponding to the cell 3), the terminal device receives a CHO configuration of the cell 1 (including a trigger condition for handover to the cell 1, but not including configuration information corresponding to the cell 1) from the network device, and then the terminal device adds, to the candidate cell configuration list, the CHO configuration of the cell 1 and configuration information corresponding to the serving cell at a current moment.

In the foregoing method, the terminal device adds, to the candidate cell configuration list, the CHO configuration corresponding to the serving cell and the configuration information corresponding to the serving cell at the current moment, so that the network device can be prevented from resending the configuration information corresponding to the serving cell to the terminal device when the terminal device is handed over to the serving cell next time, thereby reducing signaling overheads.

It should be noted that the foregoing trigger condition may be carried in a measurement configuration sent by the network device to the terminal device. For example, the measurement configuration includes a configuration of the foregoing trigger condition and a measurement identifier corresponding to the trigger condition. The CHO configuration includes a measurement identifier corresponding to each trigger condition.

That the foregoing candidate cell or serving cell corresponds to a plurality of time trigger conditions and/or a plurality of distance trigger conditions may alternatively be that the candidate cell corresponds to one time trigger condition and/or one distance trigger condition. One time trigger condition includes: Current time is within a plurality of first time ranges. One distance trigger condition includes a plurality of first thresholds and a plurality of second thresholds. For example, when the current time is within one of the first time ranges, it is considered that the time trigger condition is met. When a distance between the terminal device and a reference location of the serving cell is greater than a first threshold, and a distance between the terminal device and a reference location of one of the M candidate cells is less than a second threshold, it is considered that the distance trigger condition is met.

In the foregoing method, this solution may be applied to a satellite communication scenario. For example, when the network device is a satellite, or the terminal accesses the network device by using a satellite, in the method, the CHO configuration includes a plurality of time trigger conditions and/or a plurality of distance trigger conditions, so that the network device does not need to send the CHO configuration to the terminal device for a plurality of times, thereby reducing handover signaling overheads. For example, when a satellite moves back and forth above cells corresponding to a physical area or a geographic area corresponding to the terminal device, for example, three cells, which are respectively a cell 1, a cell 2, and a cell 3 (for example, M candidate cells), and no matter which satellite provides a service for the terminal device, the satellite provides a communication service for the terminal via these cells. The terminal device needs to be handed over back and forth between a plurality of cells (for example, M candidate cells). By using the method provided in this application, the network device sends a CHO configuration to the terminal device. The CHO configuration includes trigger conditions respectively corresponding to the M candidate cells. The trigger condition includes a plurality of time trigger conditions and/or a plurality of distance trigger conditions. Correspondingly, the terminal device may perform, based on the plurality of time trigger conditions and/or the plurality of distance trigger conditions, handover between candidate cells for a plurality of times. In performing the handover for the plurality of times, performing the handover between candidate cells for one time may be understood as, for example, that the terminal device is handed over from a cell 1 to a cell 2, and then handed over from the cell 2 to a cell 3. Therefore, the network device does not need to resend the CHO configuration to the terminal device, or a quantity of times that the network device sends the CHO configuration to the terminal device is reduced, thereby reducing handover signaling overheads.

### Embodiment 2:

The method shown in FIG. 10 may be used for CHO in a scenario in which a cell identity is bound to a physical area, for example, CHO in the satellite communication scenario described in the foregoing deployment solution 1.

FIG. 10 shows a communication method according to an embodiment of this application. The method includes but is not limited to the following steps.

Step S 1001: A network device sends identification information of M candidate cells and one or more trigger conditions respectively corresponding to the M candidate cells to a terminal device.

The network device is a device having a function of a base station. For example, the network device may be a network device in the communication architecture shown in FIG. 2. In the communication architectures shown in FIG. 3 and FIG. 4, the network device may be a satellite. In the communication architecture shown in FIG. 5, the network device may be a DU or a CU. The trigger condition is a CHO trigger condition.

Step S1002: The terminal device receives, from the network device, the identification information of the M candidate cells and the one or more trigger conditions respectively corresponding to the M candidate cells.

Specifically, M is an integer greater than or equal to 1. The identification information may be a PCI. In an example, M=3, the three candidate cells are a cell 1, a cell 2, and a cell 3 respectively, identification information of the cell 1 is a PCI 1, identification information of the cell 2 is a PCI 2, and identification information of the cell 3 is a PCI 3. Optionally, the M candidate cells may be all candidate cells. In an example, the protocol predefines that a quantity of candidate cells is 3, and therefore M=3.

Specifically, that the M candidate cells are respectively corresponding to the one or more trigger conditions refers to that each candidate cell in the M candidate cells is corresponding to one or more trigger conditions. Optionally, the trigger condition includes at least one of the following: a time trigger condition and a distance trigger condition. For explanations of the time trigger condition and the distance trigger condition, refer to related descriptions in step S902. Details are not described herein again. Optionally, the trigger condition further includes a signal quality trigger condition. Specifically, a trigger condition corresponding to one candidate cell may include one or more time trigger conditions and/or one or more distance trigger conditions. It may be understood that a quantity of time trigger conditions and a quantity of distance trigger conditions are not associated, and may be configured independently. In an example, M=4, the four candidate cells are a cell 1, a cell 2, and a cell 3 and a cell 4, respectively. The cell 1 corresponds to two time trigger conditions and one signal quality trigger condition, the cell 2 corresponds to one time trigger condition and one signal quality trigger condition, the cell 3 corresponds to two time trigger conditions, and the cell 4 corresponds to one time trigger condition.

Optionally, the time trigger condition includes: Current time recorded by the terminal device is within a first time range. Optionally, the current time may be time displayed on a display screen of the terminal device. The distance trigger condition includes: A distance between the terminal device and a reference location of a serving cell is greater than a first threshold, and a distance between the terminal device and a reference location of one of the M candidate cells is less than a second threshold. For details, refer to step S902. Details are not described herein again. A coverage area of the serving cell may be the same as that of one of the M candidate cells, and a cell identity of the serving cell is different from that of the one of the M candidate cells. Optionally, the serving cell and one of the M candidate cells may be different cells, and a cell identity of the serving cell is different from that of the one of the M candidate cells. For details, refer to related descriptions in step S902.

Optionally, the identification information of the M candidate cells and/or the one or more trigger conditions respectively corresponding to the M candidate cells may be included in a dedicated radio resource control (radio resource control, RRC) message or a broadcast message.

Step S1003: When at least one of one or more trigger conditions corresponding to a first candidate cell in the M candidate cells is met, the terminal device is handed over from the serving cell to the first candidate cell.

Specifically, that the terminal device performs handover from the serving cell to the first candidate cell includes: The terminal device changes an identifier of the serving cell in configuration information of the serving cell to a cell identity of the first candidate cell, and accesses the first candidate cell based on the configuration information of the serving cell. It may be understood that the identifier of the serving cell in the configuration information of the serving cell is changed to the identifier of the first candidate cell, and another parameter in the configuration information of the serving cell remains unchanged. Therefore, the changed configuration information of the serving cell may be used as the configuration information of the first candidate cell for the terminal to perform the handover to the first candidate cell. For example, the terminal device changes the identifier of the serving cell in an access layer context at a current moment to the identifier of the first candidate cell. Then, behavior of the terminal device may be similar to behavior in 3GPP TS 38.331 that the terminal device receives, from a network device side, an RRC reconfiguration message that indicates to perform synchronization (for example, the RRC reconfiguration message includes a reconfigurationWithSync information element). For example, descriptions in section 5.3.5.3 in 3GPP TS 38.331 may be used for execution, except that configuration information of a target cell is the same as that of a source cell, but cell identities are different. Optionally, the terminal device initiates a random access process to the first candidate cell.

Optionally, the trigger condition corresponding to the first candidate cell includes: The serving cell stops providing a communication service for the terminal device, and the terminal device determines, based on the trigger condition corresponding to the first candidate cell, time at which the serving cell stops providing the communication service for the terminal device. That at least one of one or more trigger conditions corresponding to the first candidate cell is met includes: A current moment or current time is time at which the serving cell stops providing a communication service for the terminal device or time after the serving cell stopping providing a communication service for the terminal device. The time at which the serving cell stops providing the communication service for the terminal device may be a moment at which the serving cell stops providing the communication service for the terminal device, or may be a period of time in which the serving cell stops providing the communication service for the terminal device.

In an example, the time trigger condition corresponding to the first candidate cell is [10:00]. The terminal device determines, according to [10:00], that the serving cell starts to stop providing a communication service for the terminal device at 10:00. That the time trigger condition [10:00] corresponding to the first candidate cell is met may refer to that current time is 10:00, or current time is after 10:00. For example, when the current time is 10:01, the terminal device performs the handover from the serving cell to the first candidate cell.

In an optional manner, before S1003, the communication method shown in FIG. 10 further includes: S1002: The terminal device determines whether one or more trigger conditions respectively corresponding to the M candidate cells are met. Optionally, the terminal device receives first indication information from the network device, where the first indication information indicates a sequence in which the terminal device determines whether the one or more trigger conditions respectively corresponding to the M candidate cells are met. When each candidate cell in the M candidate cells corresponds to one trigger condition, the first indication information indicates a sequence in which the terminal device determines whether the trigger condition corresponding to each candidate cell is met. For details, refer to related descriptions in step S903.

In an example, M=2. It is assumed that a serving cell of the terminal device is a cell 1, and the two candidate cells are a cell 2 and a cell 3. The network device sends a CHO configuration of the cell 2 and a CHO configuration of the cell 3 to the terminal device. The CHO configuration of the cell 2 includes two time trigger conditions corresponding to the cell 2, which are respectively [t1, t1+duration1] and [t4, t4+duration4]. The CHO configuration of the cell 3 includes two time trigger conditions corresponding to the cell 3, which are respectively [t2, t2+duration2] and [t5, t5+duration5]. The network device may further send a CHO configuration of the cell 1 to the terminal device. The CHO configuration of the cell 1 includes two time trigger conditions corresponding to the cell 1, which are respectively [t3, t3+duration3] and [t6, t6+duration6]. Correspondingly, the terminal device receives the CHO configuration from the network device. The network device may further send the first indication information to the terminal device. Correspondingly, the terminal device receives the first indication information from the network device. In an example, for example, the first indication information may be t1<t2<t3<t4<t5<t6. Correspondingly, the terminal device first determines, based on the first indication information, whether the time trigger condition [t1, t1+duration1] corresponding to the cell 2 is met, then determines whether the time trigger condition [t2, t2+duration2] corresponding to the cell 3 is met, then determines whether the time trigger condition [t3, t3+duration3] corresponding to the cell 1 is met, then determines whether the time trigger condition [t4, t4+duration4] corresponding to the cell 2 is met, then determines whether the time trigger condition [t5, t5+duration5] corresponding to the cell 3 is met, and finally determines whether the time trigger condition [t6, t6+duration6] corresponding to the cell 1 is met. When the foregoing conditions are all met, correspondingly, a sequence in which the terminal device performs handover to candidate cells is a cell 2, a cell 3, a cell 1, a cell 2, a cell 3, and a cell 1. In other words, the terminal device is handed over from the cell 1 to the cell 2, then handed over from the cell 2 to the cell 3, and then handed over from the cell 3 to the cell 1, then handed over from the cell 1 to the cell 2, then handed over from the cell 2 to the cell 3, and finally handed over from the cell 3 to the cell 1.

Optionally, when at least one of the one or more trigger conditions corresponding to the first candidate cell in the M candidate cells is met, after the terminal device performs the handover from the serving cell to the first candidate cell, and when at least one of the one or more trigger conditions corresponding to a second candidate cell in the M candidate cells is met, the terminal device is handed over from the first candidate cell to the second candidate cell, and after the terminal device is handed over to the second candidate cell, details may be as follows. Alternatively, when at least one of one or more trigger conditions corresponding to the first candidate cell in the M candidate cells is met, after the terminal device is handed over from the serving cell to the first candidate cell, details may be as follows:

In a possible implementation, the terminal device receives at least one trigger condition corresponding to the serving cell from the network device, where one of the at least one trigger condition indicates the terminal device to be handed over from one of the M candidate cells to the serving cell. For example, one of the M candidate cells is a second candidate cell, and when at least one trigger condition corresponding to the serving cell is met, the terminal device is handed over from the second candidate cell to the serving cell. Alternatively, for example, M=1, and one of the M candidate cells is a first candidate cell. When at least one trigger condition corresponding to the serving cell is met, the terminal device is handed over from the first candidate cell to the serving cell. It should be noted that the at least one trigger condition corresponding to the serving cell is not necessarily received after the terminal device is handed over to the second candidate cell or after the terminal device is handed over to the first candidate cell, or may be carried in the CHO configuration. This is not limited herein. For details, refer to related descriptions in step S903.

In the foregoing method, the network device sends the identifier of the candidate cell and the one or more trigger conditions corresponding to the candidate cell to the terminal device. Correspondingly, the terminal device changes the cell identity of the serving cell in the configuration information of the serving cell to the cell identity of the first candidate cell, and accesses the first candidate cell based on the changed configuration information of the serving cell. In this way, when the cell identity changes, the network device does not need to send a handover command to the terminal device, thereby reducing handover signaling overheads.

### Embodiment 3:

In a conventional technology, a trigger condition is for a current serving cell and a candidate cell to be accessed. For example, a network device configures a CHO configuration of a candidate cell 2 and a CHO configuration of a candidate cell 3 for a terminal device. The CHO configuration of the candidate cell 2 includes a signal quality trigger condition #1, and the signal quality trigger condition #1 may be that signal quality of the candidate cell 2 is better than signal quality of a current serving cell 1. The CHO configuration of the candidate cell 3 includes a signal quality trigger condition #2, and the signal quality trigger condition #2 may be that signal quality of the candidate cell 3 is better than the signal quality of the current serving cell 1. When the signal quality trigger condition #1 is met, the terminal device is handed over from the current serving cell 1 to the candidate cell 2. The signal quality trigger condition #2 is no longer applicable to a case in which the terminal device accesses the candidate cell 3 from the candidate cell 2. If the signal quality trigger condition #2 is still used to determine whether the terminal device can be handed over from the candidate cell 2 to the candidate cell 3, it is not applicable to an actual case, and the handover may easily fail.

The method embodiment shown in FIG. 11 may be used to resolve a problem that a handover success rate of the terminal device is low because a cell changes frequently and a trigger condition is for a current serving cell and a candidate cell to be accessed. For example, a current serving cell 1 of the terminal device has been handed over to a candidate cell 2, but a signal quality trigger condition #2 is still that signal quality of a candidate cell 3 is better than signal quality of the current serving cell 1, and the signal quality trigger condition #2 is no longer applicable to a case in which the terminal device accesses the candidate cell 3 from the candidate cell 2. The method embodiment shown in FIG. 11 improves a success rate of successful handover of the terminal device, and is applicable to the satellite communication scenarios described in the foregoing deployment solution 1 and deployment solution 2. In the satellite communication scenario, a cell changes frequently because a satellite moves at a high speed, and a trigger condition is for a current serving cell and a candidate cell to be accessed; and therefore a terminal handover success rate is low.

FIG. 11 shows a communication method according to an embodiment of this application. The method includes but is not limited to the following steps.

Step S1101: A network device sends a CHO configuration to a terminal device.

The network device is a device having a function of a base station. For example, the network device may be a network device in the communication architecture shown in FIG. 2. In the communication architectures shown in FIG. 3 and FIG. 4, the network device may be a satellite. In the communication architecture shown in FIG. 5, the network device may be a DU or a CU.

Step S1102: The terminal device receives the CHO configuration from the network device.

Specifically, the CHO configuration includes at least one of the following: a trigger condition corresponding to handover from a serving cell to a first candidate cell in the M candidate cells, or a trigger condition corresponding to handover from a first candidate cell to a second candidate cell in the M candidate cells. The trigger condition corresponding to the handover from the serving cell to the first candidate cell may be referred to as a trigger condition corresponding to the first candidate cell, and the trigger condition corresponding to the handover from the first candidate cell to the second candidate cell in the M candidate cells may be referred to as a trigger condition corresponding to the second candidate cell. For clear description, using the first candidate cell and the second candidate cell as an example, the CHO configuration includes at least one of the following: the trigger condition corresponding to the handover from the serving cell to the first candidate cell, and the trigger condition corresponding to the handover from the first candidate cell to the second candidate cell. Actually, the CHO configuration may include a trigger condition for handover between any two cells in the current serving cell and the M candidate cells.

Optionally, the CHO configuration may further include configuration information corresponding to the M candidate cells.

Specifically, that a cell managed by the network device includes a serving cell of the terminal device may be understood as that a cell served by the network device includes the serving cell of the terminal device. Optionally, the cell managed by the network device may further include M candidate cells, or may not include M candidate cells. This is not limited in this embodiment of this application. The candidate cell is a candidate cell for CHO. Optionally, the M candidate cells may be some of all candidate cells. This is not limited in this embodiment of this application. For details, refer to step S902. Details are not described herein again. M is an integer greater than 1. Each candidate cell in the M candidate cells corresponds to one CHO configuration, and the CHO configuration of each candidate cell includes one or more time trigger conditions and/or one or more distance trigger conditions. It may be understood that a quantity of time trigger conditions and a quantity of distance trigger conditions are not associated, and may be configured independently. Optionally, a coverage area of the serving cell may be the same as that of one of the M candidate cells, and a cell identity of the serving cell is different from that of the one of the M candidate cells. Optionally, the serving cell and one of the M candidate cells may be different cells, and a cell identity of the serving cell is different from that of the one of the M candidate cells. For details, refer to related descriptions in step S902.

Optionally, the CHO configuration further includes a trigger condition corresponding to handover from the first candidate cell to the serving cell, or a trigger condition corresponding to handover from the second candidate cell to the serving cell. Both the trigger condition corresponding to the handover from the first candidate cell to the serving cell and the trigger condition corresponding to the handover from the second candidate cell to the serving cell may be referred to as a trigger condition corresponding to the serving cell.

Optionally, after the terminal device receives, from the network device, the trigger condition corresponding to the handover from the first candidate cell to the serving cell or the trigger condition corresponding to the handover from the second candidate cell to the serving cell, the terminal device may add a CHO configuration corresponding to the serving cell to a candidate cell configuration list. The CHO configuration corresponding to the serving cell includes the trigger condition corresponding to the handover from the first candidate cell to the serving cell, or the trigger condition corresponding to the handover from the second candidate cell to the serving cell, and configuration information corresponding to the serving cell. The candidate cell configuration list includes CHO configurations corresponding to the M candidate cells.

Specifically, the trigger condition may include a time trigger condition and/or a distance trigger condition. The trigger condition may further include a signal quality trigger condition. The time trigger condition includes: Current time recorded by the terminal device is within a first time range. The distance trigger condition includes: A distance between the terminal device and a reference location of a serving cell is greater than a first threshold, and a distance between the terminal device and a reference location of one of the M candidate cells is less than a second threshold. For details, refer to related descriptions in step S902.

In an example, the current serving cell is a cell 1, M=3, and the three candidate cells are a cell 2, a cell 3, and a cell 4. The network device sends a CHO configuration of the cell 2 to the terminal device, where the CHO configuration of the cell 2 includes: A time trigger condition corresponding to handover from the cell 1 to the cell 2 is a time condition 1, and a signal quality trigger condition is a signal quality trigger condition 1. The network device further sends a CHO configuration of the cell 3 to the terminal device, where the CHO configuration of the cell 3 includes: A time trigger condition corresponding to handover from the cell 2 to the cell 3 is a time condition 2, and a signal quality trigger condition is a signal quality condition 2. The network device further sends a CHO configuration of the cell 4 to the terminal device, where the CHO configuration of the cell 4 includes: A time trigger condition corresponding to handover from the cell 3 to the cell 4 is a time condition 3, and a signal quality trigger condition is a signal quality condition 3. Optionally, the network device further sends a CHO configuration of the cell 1 to the terminal device, where the CHO configuration of the cell 1 includes: A time trigger condition corresponding to handover from the cell 4 to the cell 1 is a time condition 4, and a signal quality trigger condition is a signal quality condition 4.

Step S 1103: When a trigger condition corresponding to the first candidate cell in the M candidate cells is met, the terminal device is handed over from the serving cell to the first candidate cell; or when a trigger condition corresponding to the second candidate cell in the M candidate cells is met, the terminal device is handed over from the first candidate cell to the second candidate cell.

Optionally, when the trigger condition corresponding to the first candidate cell is met, the terminal device uses a configuration corresponding to the first candidate cell, and then the terminal device accesses the first candidate cell. For example, the terminal device initiates a random access process to the first candidate cell. Optionally, after the terminal device is handed over to the first candidate cell, the terminal device may further continue to store a CHO configuration corresponding to the first candidate cell.

Specifically, the trigger condition corresponding to the first candidate cell may be a trigger condition corresponding to handover from the serving cell to the first candidate cell. The trigger condition corresponding to the handover from the serving cell to the first candidate cell includes one or more time trigger conditions, and/or one or more distance trigger conditions. That the trigger condition corresponding to the first candidate cell is met may refer to that the trigger condition corresponding to the handover from the serving cell to the first candidate cell is met. For details, refer to related descriptions in step S903.

Optionally, the trigger condition corresponding to the handover from the serving cell to the first candidate cell further includes a signal quality trigger condition corresponding to handover from the serving cell to the first candidate cell. The signal quality trigger condition may refer to that signal quality of the first candidate cell is greater than a third threshold, and the third threshold may be predefined in a protocol or determined by the network device. That the trigger condition corresponding to the first candidate cell is met may also refer to that the signal quality trigger condition corresponding to the handover from the serving cell to the first candidate cell is met. For details, refer to related descriptions in step S903.

Optionally, when the trigger condition corresponding to the first candidate cell is met, after the terminal device is handed over from the serving cell to the first candidate cell, the terminal device may delete the trigger condition corresponding to the first candidate cell. For example, if one of the plurality of time trigger conditions corresponding to handover from the serving cell to the first candidate cell is met, the terminal device may delete the met trigger condition. In an example, it is assumed that handover from the serving cell to the first candidate cell corresponds to two time trigger conditions: a condition 1 and a condition 2. When the condition 1 corresponding to the handover from the serving cell to the first candidate cell is met, the terminal device deletes the condition 1, and the condition 2 continues to be retained.

In an example, it is assumed that the serving cell is a cell 1, M=2, and the two candidate cells are a cell 2 and a cell 3. A time trigger condition is used as an example for description, and time in the time trigger condition is UTC. The network device sends a CHO configuration of the cell 2 and a CHO configuration of the cell 3 to the terminal device, and the CHO configuration of the cell 2 includes two time trigger conditions corresponding to handover from the cell 1 to the cell 2, which are respectively [1:00, 2:00], [7:00, 8:00]. The CHO configuration of the cell 3 includes two time trigger conditions corresponding to handover from the cell 2 to the cell 3, which are respectively [3:00, 4:00] and [9:00, 10:00]. The network device may further send a CHO configuration of the cell 1 to the terminal device. The CHO configuration of the cell 1 includes two time trigger conditions corresponding to handover from the cell 3 to the cell 1, which are respectively [5:00, 6:00] and [11:00, 12:00]. If current time is 1:01, because 1:01 falls within the time trigger condition [1:00, 2:00] corresponding to the handover from the cell 1 to the cell 2, the terminal device is handed over from the serving cell to the first candidate cell, that is, handed over from the cell 1 to the cell 2. Optionally, the terminal device may delete the time trigger condition [1:00, 2:00] corresponding to the handover from the cell 1 to the cell 2. If current time is 3:01, because 3:01 falls within the time trigger condition [3:00, 4:00] corresponding to the handover from the cell 2 to the cell 3, the terminal device is handed over from the first candidate cell to the second candidate cell, that is, handed over from the cell 2 to the cell 3. Optionally, the terminal device may delete the time trigger condition [3:00, 4:00] corresponding to the handover from the cell 2 to the cell 3. If current time is 5:01, because 5:01 falls within the time trigger condition [5:00, 6:00] corresponding to the handover from the cell 3 to the cell 1, the terminal device is handed over from the second candidate cell to the serving cell, that is, handed over from the cell 3 to the cell 1. Optionally, the terminal device may delete the time trigger condition [5:00, 6:00] corresponding to the handover from the cell 3 to the cell 1.

For the trigger condition corresponding to the handover from the serving cell to the first candidate cell and the trigger condition corresponding to the handover from the first candidate cell to the second candidate cell, the network device indicates that the CHO configuration corresponding to the first candidate cell is used when performing the handover from the serving cell to the first candidate cell, and the CHO configuration corresponding to the second candidate cell is used when performing the handover from the first candidate cell to the second candidate cell. An indication manner thereof may include a sequence of performing the CHO configurations.

In an example, it is assumed that a serving cell of the terminal device is a cell 1, M=3, and the three candidate cells are a cell 2, a cell 3, and a cell 4. The network device sends a CHO configuration of the cell 2, a CHO configuration of the cell 3, and a CHO configuration of the cell 4 to the terminal device. The CHO configuration of the cell 2 includes a trigger condition corresponding to handover from the cell 1 to the cell 2. The CHO configuration of the cell 3 includes a trigger condition corresponding to handover from the cell 2 to the cell 3. The CHO configuration of the cell 4 includes a trigger condition corresponding to handover from the cell 3 to the cell 4. The CHO configuration of the cell 2, the CHO configuration of the cell 3, and the CHO configuration of the cell 4 are in a sequence relationship. To be specific, the network device may send indication information which may indicate an execution sequence of delivering the CHO configurations by the network device. Correspondingly, the terminal device determines that the CHO configuration of the cell 2 is used for the handover from the cell 1 to the cell 2, the CHO configuration of the cell 3 is used for the handover from the cell 2 to the cell 3, and the CHO configuration of the cell 4 is used for the handover from the cell 3 to the cell 4. To be specific, the terminal device first determines whether the trigger condition corresponding to the handover from the cell 1 to the cell 2 is met, then determines whether the trigger condition corresponding to the handover from the cell 2 to the cell 3 is met, and finally determines whether the trigger condition corresponding to the handover from the cell 3 to the cell 4 is met.

Optionally, when the trigger condition corresponding to the first candidate cell in the M candidate cells is met, after the terminal device is handed over from the serving cell to the first candidate cell, when the trigger condition corresponding to the second candidate cell in the M candidate cells is met, the terminal device is handed over from the first candidate cell to the second candidate cell. After the terminal device is handed over to the second candidate cell, optionally, details may be as follows. Alternatively, when the trigger condition corresponding to the first candidate cell in the M candidate cells is met, after the terminal device is handed over from the serving cell to the first candidate cell, details may be as follows:

In a possible implementation, the terminal device receives at least one trigger condition corresponding to the serving cell from the network device, where one of the at least one trigger condition indicates the terminal device to be handed over from one of the M candidate cells to the serving cell. For example, one of the M candidate cells is a second candidate cell, and when at least one trigger condition corresponding to the serving cell is met, the terminal device is handed over from the second candidate cell to the serving cell. Alternatively, for example, M=1, and one of the M candidate cells is a first candidate cell. When at least one trigger condition corresponding to the serving cell is met, the terminal device is handed over from the first candidate cell to the serving cell. It should be noted that the at least one trigger condition corresponding to the serving cell is not necessarily received after the terminal device is handed over to the second candidate cell or after the terminal device is handed over to the first candidate cell, or may be carried in the CHO configuration. This is not limited herein. For details, refer to the descriptions in step S903.

In a possible implementation, when the CHO configuration corresponding to the serving cell does not include the configuration information of the serving cell, after the terminal device receives the at least one trigger condition corresponding to the serving cell from the network device, the terminal device may add, to the candidate cell configuration list, the CHO configuration corresponding to the serving cell and configuration information corresponding to the serving cell at a current moment. When the CHO configuration corresponding to the serving cell includes the configuration information of the serving cell, after the terminal device receives the at least one trigger condition corresponding to the serving cell from the network device, the terminal device may add the CHO configuration corresponding to the serving cell to the candidate cell configuration list. For details, refer to the descriptions in step S903.

In the foregoing method, in this application, the network device sends a CHO configuration to the terminal device, where the CHO configuration includes at least one of the following: a trigger condition corresponding to handover from a serving cell to a first candidate cell, and a trigger condition corresponding to handover from the first candidate cell to a second candidate cell. The trigger condition is for a candidate cell to which the terminal device is handed over. For example, when the terminal device is handed over from the serving cell to the first candidate cell, the terminal device may be handed over from the first candidate cell to the second candidate cell based on the trigger condition corresponding to the handover from the first candidate cell to the second candidate cell, thereby improving a handover success rate.

It should be noted that the foregoing possible embodiments may be used in combination. In addition, the foregoing CHO configuration may be extended to another name. This is not limited in this application. For example, the CHO configuration may be extended to multi-radio dual connectivity (multi-radio dual connectivity, MR-DC). Specifically, the terminal device may be connected to a master base station (master node, MN) and at least one secondary base station (secondary node, SN). The MN provides a primary cell (primary cell, PCell) for the terminal device, the SN provides a primary secondary cell (primary secondary cell, PSCell), and the MN exchanges control plane signaling with a core network. By using the MR-DC, the terminal device may obtain a communication service by using resources of a plurality of base stations, to perform high-rate data transmission. The foregoing CHO configuration may be extended to an SN change in the MR-DC. To be specific, the CHO configuration is used to change an SN of the terminal device, or is used to change a PSCell of a same SN.

It can be understood that, to implement the functions in the foregoing embodiments, the terminal device and the network device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

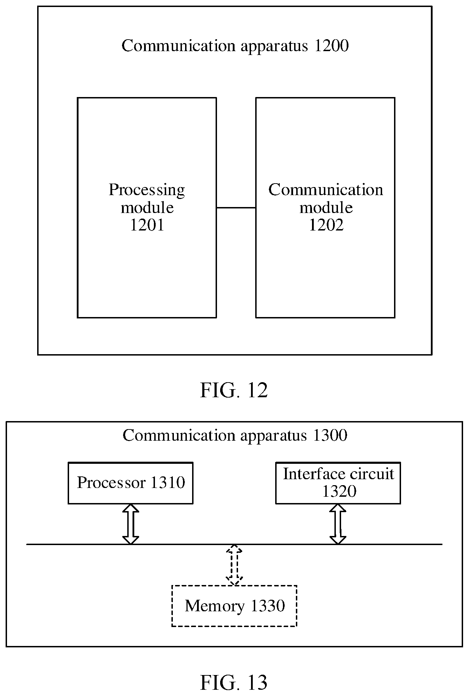

FIG. 12 and FIG. 13 are diagrams of structures of possible communication apparatuses according to embodiments of this application. The communication apparatus may be configured to implement functions of the terminal device or the network device in the foregoing method embodiments. Therefore, beneficial effects of the foregoing method embodiments can also be implemented.

As shown in FIG. 12, a communication apparatus 1200 includes a processing module 1201 and a communication module 1202. The communication apparatus 1200 is configured to implement a function of the terminal device or the network device in the method embodiment shown in FIG. 9, FIG. 10, or FIG. 11.

When the communication apparatus 1200 is configured to implement a function of the terminal device in the method embodiment shown in FIG. 9 or FIG. 11, the communication module 1202 is configured to receive a conditional handover CHO configuration from a network device to which a serving cell belongs, where the CHO configuration includes trigger conditions respectively corresponding to M candidate cells, and the trigger condition includes a plurality of time trigger conditions and/or a plurality of distance trigger conditions, where M is an integer greater than or equal to 1. The processing module 1201 is configured to: when a trigger condition corresponding to a first candidate cell in the M candidate cells is met, perform handover from the serving cell to the first candidate cell.

When the communication apparatus 1200 is configured to implement a function of the network device in the method embodiment shown in FIG. 9 or FIG. 11, the communication module 1202 is configured to send a conditional handover CHO configuration to a terminal device, where the CHO configuration includes trigger conditions respectively corresponding to M candidate cells, and the trigger condition includes a plurality of time trigger conditions and/or a plurality of distance trigger conditions, where M is an integer greater than or equal to 1.

For more detailed descriptions of the processing module 1201 and the communication module 1202, directly refer to related descriptions in the method embodiment shown in FIG. 9 or FIG. 11. Details are not described herein again.

It should be noted that, for implementations and beneficial effects of the modules, refer to corresponding descriptions in the method embodiment shown in FIG. 9 or FIG. 11.

When the communication apparatus 1200 is configured to implement a function of the terminal device in the method embodiment shown in FIG. 10, the communication module 1202 is configured to receive identification information of M candidate cells and one or more trigger conditions respectively corresponding to the M candidate cells from a network device to which a serving cell belongs, where M is an integer greater than or equal to 1. The processing module 1201 is configured to: when at least one of one or more trigger conditions corresponding to a first candidate cell in the M candidate cells is met, change a cell identity of a serving cell in configuration information of the serving cell to a cell identity of the first candidate cell; and access the first candidate cell based on the configuration information of the serving cell.

When the communication apparatus 1200 is configured to implement a function of the network device in the method embodiment shown in FIG. 10, the communication module 1202 is configured to send identification information of M candidate cells and one or more trigger conditions respectively corresponding to the M candidate cells to a terminal device, where M is an integer greater than or equal to 1.

For more detailed descriptions of the processing module 1201 and the communication module 1202, directly refer to related descriptions in the method embodiment shown in FIG. 10. Details are not described herein again.

It should be noted that, for implementations and beneficial effects of the modules, refer to corresponding descriptions in the method embodiment shown in FIG. 10.

As shown in FIG. 13, a communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to store instructions executed by the processor 1310, store input data needed by the processor 1310 to run the instructions, or store data generated after the processor 1310 runs the instructions.

When the communication apparatus 1300 is configured to implement the method shown in FIG. 9, FIG. 10, or FIG. 11, the processor 1310 is configured to implement a function of the processing module 1201, and the interface circuit 1320 is configured to implement a function of the communication module 1202.

When the communication apparatus is a chip used in a terminal device, the terminal chip implements a function of the terminal device in the foregoing method embodiments. The terminal chip receives information from another module (for example, a radio frequency module or an antenna) in the terminal device, where the information is sent by the network device to the terminal device; or the terminal chip sends information to another module (for example, a radio frequency module or an antenna) in the terminal device, where the information is sent by the terminal device to a network.

When the communication apparatus is a module used in a network device, the module in the network device implements a function of the network device in the foregoing method embodiments. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device. The network device module herein may be a baseband chip of the network device, or may be a DU or another module. The DU herein may be a DU in an open radio access network (open radio access network, O-RAN) architecture.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A communication method, comprising:
receiving a conditional handover CHO configuration from a network device to which a serving cell belongs, wherein the CHO configuration comprises trigger conditions respectively corresponding to M candidate cells, and the trigger condition comprises a plurality of time trigger conditions and/or a plurality of distance trigger conditions, wherein M is an integer greater than or equal to 1; and
when a trigger condition corresponding to a first candidate cell in the M candidate cells is met, performing handover from the serving cell to the first candidate cell.

2. The method according to claim 1, wherein the trigger condition corresponding to the first candidate cell comprises a plurality of time trigger conditions and/or a plurality of distance trigger conditions corresponding to the first candidate cell; and
that the trigger condition corresponding to the first candidate cell in the M candidate cells is met comprises:
one of the plurality of time trigger conditions corresponding to the first candidate cell in the M candidate cells is met; and/or
one of the plurality of distance trigger conditions corresponding to the first candidate cell in the M candidate cells is met.

3. The method according to claim 2, wherein the trigger condition corresponding to the first candidate cell further comprises a signal quality trigger condition corresponding to the first candidate cell, and that the trigger condition corresponding to the first candidate cell in the M candidate cells is met comprises:
the signal quality trigger condition corresponding to the first candidate cell in the M candidate cells is met.

4. The method according to any one of claims 1 to 3, wherein the time trigger condition comprises: current time recorded by a terminal device is within a first time range, and the distance trigger condition comprises: a distance between the terminal device and a reference location of the serving cell is greater than a first threshold, and a distance between the terminal device and a reference location of one of the M candidate cells is less than a second threshold.

5. The method according to any one of claims 1 to 4, wherein the method further comprises:
determining whether the trigger conditions respectively corresponding to the M candidate cells are met.

6. The method according to claim 5, wherein the method further comprises:
receiving first indication information from the network device, wherein the first indication information indicates a sequence in which the terminal device determines whether the trigger conditions respectively corresponding to the M candidate cells are met.

7. The method according to any one of claims 1 to 6, wherein
a coverage area of the serving cell is the same as that of one of the M candidate cells, and a cell identity of the serving cell is different from that of the one of the M candidate cells.

8. The method according to any one of claims 1 to 7, wherein the method further comprises:
receiving at least one trigger condition corresponding to the serving cell from the network device, wherein one of the at least one trigger condition indicates the terminal device to be handed over from one of the M candidate cells to the serving cell.

9. The method according to claim 8, wherein the method further comprises:
adding a CHO configuration corresponding to the serving cell to a candidate cell configuration list, wherein the CHO configuration corresponding to the serving cell comprises the at least one trigger condition corresponding to the serving cell and configuration information corresponding to the serving cell, and the candidate cell configuration list comprises CHO configurations corresponding to the M candidate cells.

10. The method according to any one of claims 1 to 9, wherein the method further comprises:
deleting the trigger condition corresponding to the first candidate cell.

11. The method according to any one of claims 1 to 7, wherein the CHO configuration further comprises a trigger condition corresponding to handover from the first candidate cell to a second candidate cell in the M candidate cells.

12. The method according to claim 11, wherein the method further comprises:
when the trigger condition corresponding to the handover from the first candidate cell to the second candidate cell in the M candidate cells is met, performing the handover from the first candidate cell to the second candidate cell.

13. The method according to claim 11 or 12, wherein the CHO configuration further comprises a trigger condition corresponding to handover from the first candidate cell to the serving cell, or a trigger condition corresponding to handover from the second candidate cell to the serving cell.

14. The method according to claim 13, wherein the method further comprises:
when the trigger condition corresponding to the handover from the first candidate cell to the serving cell is met, performing the handover from the first candidate cell to the serving cell; or
when the trigger condition corresponding to the handover from the second candidate cell to the serving cell is met, performing the handover from the second candidate cell to the serving cell.

15. A communication method, comprising:
sending a conditional handover CHO configuration to a terminal device, wherein the CHO configuration comprises trigger conditions respectively corresponding to M candidate cells, and the trigger condition comprises a plurality of time trigger conditions and/or a plurality of distance trigger conditions, wherein M is an integer greater than or equal to 1.

16. The method according to claim 15, wherein a trigger condition corresponding to a first candidate cell in the M candidate cells comprises a plurality of time trigger conditions and/or a plurality of distance trigger conditions corresponding to the first candidate cell.

17. The method according to claim 16, wherein the trigger condition corresponding to the first candidate cell in the M candidate cells further comprises a signal quality trigger condition corresponding to the first candidate cell.

18. The method according to any one of claims 15 to 17, wherein the time trigger condition comprises: current time recorded by the terminal device is within a first time range, and the distance trigger condition comprises: a distance between the terminal device and a reference location of a serving cell is greater than a first threshold, and a distance between the terminal device and a reference location of one of the M candidate cells is less than a second threshold.

19. The method according to any one of claims 15 to 18, wherein the method further comprises:
sending first indication information to the terminal device, wherein the first indication information indicates a sequence in which the terminal device determines whether the trigger conditions respectively corresponding to the M candidate cells are met.

20. The method according to any one of claims 15 to 19, wherein
a coverage area of the serving cell is the same as that of one of the M candidate cells, and a cell identity of the serving cell is different from that of the one of the M candidate cells.

21. The method according to any one of claims 15 to 20, wherein the method further comprises:
sending at least one trigger condition corresponding to the serving cell to the terminal device, wherein one of the at least one trigger condition indicates the terminal device to be handed over from one of the M candidate cells to the serving cell.

22. The method according to any one of claims 15 to 20, wherein the CHO configuration further comprises a trigger condition corresponding to handover from the first candidate cell to a second candidate cell in the M candidate cells.

23. The method according to claim 22, wherein the CHO configuration further comprises a trigger condition corresponding to handover from the first candidate cell to the serving cell, or a trigger condition corresponding to handover from the second candidate cell to the serving cell.

24. A communication method, comprising:
receiving identification information of M candidate cells and one or more trigger conditions respectively corresponding to the M candidate cells from a network device to which a serving cell belongs, wherein M is an integer greater than or equal to 1; and
when at least one of one or more trigger conditions corresponding to a first candidate cell in the M candidate cells is met, performing handover from the serving cell to the first candidate cell comprises:
changing a cell identity of the serving cell in configuration information of the serving cell to a cell identity of the first candidate cell; and
accessing the first candidate cell based on the configuration information of the serving cell.

25. The method according to claim 24, wherein a trigger condition corresponding to one of the M candidate cells comprises at least one of the following: a time trigger condition and a distance trigger condition.

26. The method according to claim 25, wherein the trigger condition corresponding to the one candidate cell comprises a plurality of time trigger conditions corresponding to the one candidate cell, and/or a plurality of distance trigger conditions corresponding to the one candidate cell.

27. The method according to claim 24 or 25, wherein
the time trigger condition comprises: current time recorded by a terminal device is within a first time range, and the distance trigger condition comprises: a distance between the terminal device and a reference location of the serving cell is greater than a first threshold, and a distance between the terminal device and a reference location of one of the M candidate cells is less than a second threshold.

28. The method according to any one of claims 24 to 27, wherein
the identification information of the M candidate cells and/or the one or more trigger conditions respectively corresponding to the M candidate cells are comprised in a dedicated radio resource control RRC message or a broadcast message.

29. The method according to any one of claims 24 to 28, wherein the method further comprises:
determining whether the one or more trigger conditions respectively corresponding to the M candidate cells are met.

30. The method according to claim 29, wherein the method further comprises:
receiving first indication information from the network device, wherein the first indication information indicates a sequence in which the terminal device determines whether the one or more trigger conditions respectively corresponding to the M candidate cells are met.

31. The method according to any one of claims 24 to 30, wherein the trigger condition corresponding to the first candidate cell comprises: the serving cell stops providing a communication service for the terminal device.

32. The method according to claim 31, wherein the method further comprises:
determining, based on the trigger condition corresponding to the first candidate cell, time at which the serving cell stops providing the communication service for the terminal device, wherein that the one or more trigger conditions corresponding to the first candidate cell in the M candidate cells are met comprises: the time at which the serving cell stops providing the communication service for the terminal device reaches a predetermined value.

33. The method according to any one of claims 24 to 32, wherein
a coverage area of the serving cell is the same as that of one of the M candidate cells, and a cell identity of the serving cell is different from that of the one of the M candidate cells.

34. A communication method, comprising:
sending identification information of M candidate cells and one or more trigger conditions respectively corresponding to the M candidate cells to a terminal device, wherein M is an integer greater than or equal to 1.

35. The method according to claim 34, wherein
a trigger condition corresponding to one of the M candidate cells comprises at least one of the following: a time trigger condition and a distance trigger condition.

36. The method according to claim 35, wherein
the trigger condition corresponding to the one candidate cell comprises a plurality of time trigger conditions corresponding to the one candidate cell, and/or a plurality of distance trigger conditions corresponding to the one candidate cell.

37. The method according to claim 35 or 36, wherein
the time trigger condition comprises: current time recorded by the terminal device is within a first time range, and the distance trigger condition comprises: a distance between the terminal device and a reference location of a serving cell is greater than a first threshold, and a distance between the terminal device and a reference location of one of the M candidate cells is less than a second threshold.

38. The method according to any one of claims 34 to 37, wherein
the identification information of the M candidate cells and/or the one or more trigger conditions respectively corresponding to the M candidate cells are comprised in a dedicated radio resource control RRC message or a broadcast message.

39. The method according to any one of claims 34 to 38, wherein the method further comprises:
sending first indication information to the terminal device, wherein the first indication information indicates a sequence in which the terminal device determines whether the one or more trigger conditions respectively corresponding to the M candidate cells are met.

40. The method according to any one of claims 34 to 39, wherein
a trigger condition corresponding to a first candidate cell comprises: the serving cell stops providing a communication service for the terminal device.

41. The method according to any one of claims 34 to 40, wherein
a coverage area of the serving cell is the same as that of one of the M candidate cells, and a cell identity of the serving cell is different from that of the one of the M candidate cells.

42. A communication apparatus, comprising a module configured to perform the method according to any one of claims 1 to 14.

43. A communication apparatus, comprising a module configured to perform the method according to any one of claims 15 to 23.

44. A communication apparatus, comprising a module configured to perform the method according to any one of claims 24 to 33.

45. A communication apparatus, comprising a module configured to perform the method according to any one of claims 34 to 41.

46. A communication apparatus, comprising a processor and an interface circuit, wherein the interface circuit is configured to receive a signal from an apparatus other than the apparatus and transmit the signal to the processor, or send a signal from the processor to an apparatus other than the apparatus, and the processor is configured to implement the method according to any one of claims 1 to 14 by using a logic circuit or by executing code instructions.

47. A communication apparatus, comprising a processor and an interface circuit, wherein the interface circuit is configured to receive a signal from an apparatus other than the apparatus and transmit the signal to the processor, or send a signal from the processor to an apparatus other than the apparatus, and the processor is configured to implement the method according to any one of claims 15 to 23 by using a logic circuit or by executing code instructions.

48. A communication apparatus, comprising a processor and an interface circuit, wherein the interface circuit is configured to receive a signal from an apparatus other than the apparatus and transmit the signal to the processor, or send a signal from the processor to an apparatus other than the apparatus, and the processor is configured to implement the method according to any one of claims 24 to 33 by using a logic circuit or by executing code instructions.

49. A communication apparatus, comprising a processor and an interface circuit, wherein the interface circuit is configured to receive a signal from an apparatus other than the apparatus and transmit the signal to the processor, or send a signal from the processor to an apparatus other than the apparatus, and the processor is configured to implement the method according to any one of claims 34 to 41 by using a logic circuit or by executing code instructions.

50. A computer program product, comprising a computer program, wherein when the computer program is executed by a communication apparatus, the method according to any one of claims 1 to 41 is implemented.

51. A computer-readable storage medium, wherein the storage medium stores a computer program or instructions; and when the computer program or the instructions are executed by a communication apparatus, the method according to any one of claims 1 to 41 is implemented.

52. A communication system, comprising the communication apparatus according to claim 46 and the communication apparatus according to claim 47.

53. A communication system, comprising the communication apparatus according to claim 48 and the communication apparatus according to claim 49.
